Europäisches Patentamt

European Patent Office

Office européen des brevets

(19)

(11) **EP 1 262 756 B1**

(12) **FASCICULE DE BREVET EUROPEEN**

(45) Date de publication et mention
de la délivrance du brevet:
**16.03.2005 Bulletin 2005/11**

(51) Int Cl.⁷: **G01K 11/06**, G01K 3/00

(21) Numéro de dépôt: **01202020.2**

(22) Date de dépôt: **29.05.2001**

(54) **Dispositif électronique de suivi de la température d'un milieu à surveiller et procédé pour la mise en oeuvre d'un tel dispositif**

Elektronische Vorrichtung und Verfahren zur Temperaturüberwachung eines Mediums

Electronic device and method for monitoring the temperature of a medium

(84) Etats contractants désignés:
**AT BE CH CY DE DK ES FI FR GB GR IE IT LI LU MC NL PT SE TR**

(43) Date de publication de la demande:
**04.12.2002 Bulletin 2002/49**

(73) Titulaire: **EM Microelectronic-Marin SA**
**2074 Marin (CH)**

(72) Inventeur: **Lamothe, Christian**
**2000 Neuchatel (CH)**

(74) Mandataire: **Ravenel, Thierry Gérard Louis et al**
**I C B,**
**Ingénieurs Conseils en Brevets SA,**
**7, rue des Sors**
**2074 Marin (CH)**

(56) Documents cités:
**EP-A- 0 441 324**          **WO-A-94/14133**
**WO-A-94/27117**          **FR-A- 2 764 977**

• **PATENT ABSTRACTS OF JAPAN vol. 009, no. 151 (P-367), 26 juin 1985 (1985-06-26) & JP 60 029678 A (FUJITSU KK), 15 février 1985 (1985-02-15)**

## Description

La présente invention concerne un dispositif électronique de suivi de la température d'un milieu à surveiller ainsi qu'un procédé pour la mise en oeuvre d'un tel dispositif.

Pour de nombreux produits, comme les surgelés alimentaires ou bien certaines spécialités pharmaceutiques, il est nécessaire de pouvoir contrôler qu'un produit, conservé à une température inférieure à 0°C, n'a pas subi, à un moment quelconque, une élévation de température au-delà d'un seuil prédéterminé. De tels produits peuvent, en effet, s'avarier et présenter un réel danger pour le consommateur s'ils ne font pas l'objet d'un strict respect de la chaîne du froid entre le moment de leur congélation et celui de leur utilisation.

Il existe à l'heure actuelle une multiplicité de dispositifs témoins indiquant d'une façon permanente et irréversible si une température a franchi un seuil fixé.

Certains de ces dispositifs comprennent, par exemple, un support en papier, carton ou autres matériaux, se présentant sous la forme d'une languette ou pastille colorée recouverte d'une couche opaque de résine à point de fusion déterminé. Cette résine est colorée d'une teinte différente de celle du support de manière à couvrir la teinte du support.

Si, à la suite d'une élévation de température, la résine fond, elle s'écoule et laisse apparaître le support dont la teinte est indicatrice et révèle que le seuil de température de fusion de la résine opaque a été atteint ou dépassé.

D'autres dispositifs de suivi de la température comprennent, quant à eux, une matière possédant des qualités d'agent détecteur colorimétrique d'humidité. Cette matière, qui peut être une poudre ou des cristaux, présente la propriété de changer de couleur au contact de l'eau, passant par exemple de l'incolore au rouge. L'agent détecteur colorimétrique est mis en présence d'un liquide ayant des propriétés antigel tel qu'un mélange d'eau et d'alcool. C'est le dosage d'alcool et d'eau qui déterminera une température précise de solidification et de fusion du mélange.

Le dispositif est placé comme témoin sur la marchandise au moment de sa mise au froid (congélation ou surgélation). Tant que le produit et son témoin sont maintenus à une température inférieure à celle du point de fusion du mélange antigel/eau, rien ne se passe car la glace ne produit aucun effet sur le détecteur colorimétrique d'humidité. Le témoin reste à sa couleur initiale.

Par contre, si la marchandise et son témoin sont ramenés à une température supérieure à celle du point de fusion du mélange antigel/eau, la glace se met à fondre et le liquide entre en contact avec le détecteur d'humidité. Le témoin vire de couleur.

Dès lors, une nouvelle exposition au froid, même supérieure au point de solidification du mélange, ne peut en aucun cas modifier la couleur du témoin qui demeure viré d'une façon irréversible.

Les dispositifs du genre susmentionné doivent être appliqués sur chaque marchandise et être accompagnés, le cas échéant, d'une note explicative. Ils présentent donc l'inconvénient d'imposer un contrôle individuel de chacun d'entre eux, soit par le distributeur par exemple, lors de la réception des marchandises et au moment de la mise en vente proprement dite, soit par le consommateur lui-même, au moment de son achat. Par conséquent, cette surveillance nécessite une attention toute particulière, que ce soit de la part du distributeur, du responsable de rayon du magasin où les marchandises sont mises à la vente, ou du consommateur. Elle requiert en outre un temps de contrôle relativement important puisque chaque marchandise doit être contrôlée individuellement.

Malheureusement, pour des raisons d'économie ou par simple négligence, ce contrôle peut paraître trop fastidieux à certains distributeurs ou grossistes qui ne prennent pas le temps de contrôler individuellement chacun des articles qu'ils mettent en vente. Ainsi, certains articles seulement seront contrôlés, par exemple au hasard, ou, dans le cas le plus défavorable, aucun de ces articles ne sera jamais contrôlé. Il en résulte un risque important de tromperie de la clientèle, cette tromperie pouvant même être opérée sciemment.

Dans la pratique, les dispositifs témoins précités ne sont que très rarement utilisés parce qu'ils ne permettent un contrôle qu'en fin de chaîne, c'est-à-dire au niveau du consommateur, et parce qu'ils ne sont pas suffisamment fiables.

De plus, on peut noter que les témoins connus ne sont habituellement destinés qu'aux produits surgelés, rien n'ayant été prévu pour les denrées conservées en froid positif tels que les produits laitiers.

On connaît, par le document FR-A-2 764 977, une étiquette électronique comportant des moyens de détection d'une grandeur physique. Cette étiquette, encore appelée "tag" dans la terminologie anglo-saxonne, est un circuit intégré monté sur un support portable et comportant des moyens de communication avec le milieu extérieur, le support étant susceptible d'être fixé sur tout type d'objet. Selon un mode de réalisation, l'étiquette comprend une mémoire programmable électriquement s'effaçant sous l'effet de la température. En effet, les points mémoire de la mémoire, par exemple des transistors à grille flottante, peuvent être réalisés à partir d'un semi-conducteur instable libérant des charges électriques en fonction de la température. Par exemple, en dessous du seuil de température, les charges piégées dans les grilles des transistors au moment de la programmation restent piégées et les points mémoire demeurent à la valeur logique "0". Si le seuil de température est atteint, les charges piégées sont progressivement libérées et les points mémoire s'effacent. Un tel dispositif est délicat à mettre au point et son fonctionnement n'est pas toujours très fiable.

On connaît, par le document WO 94/14133, un dispositif qui détecte et enregistre les valeurs de paramètres physiques agissant sur des objets emballés et/ou sur les emballages eux-mêmes par exemple durant leur transport tels que l'accélération, la concentration en un gaz, l'humidité de l'air ou encore la pression de l'air. Un capteur au moins, disposé sur l'objet et/ou sur ou à l'intérieur de l'emballage, détecte les valeurs de paramètres physiques agissant sur l'objet et/ou sur l'emballage et les convertit en signaux de mesure électriques. La sortie du capteur est connectée à l'une des entrées d'un comparateur, tandis qu'un signal dont la valeur de seuil peut être ajustée est appliqué à une autre des entrées. Lorsque le signal de mesure passe au-dessous ou excède la valeur de seuil, il est stocké dans une mémoire, en même temps que l'heure et la date. Selon un mode de réalisation, le capteur peut être un capteur de température mesurant la température ambiante. Il est simplement précisé que le capteur de température peut être réalisé au moyen de matériaux semi-conducteurs, sans plus de détail.

La présente invention a pour but de remédier aux inconvénients susmentionnés ainsi qu'à d'autres encore en proposant un dispositif électronique de suivi de la température peu coûteux et permettant de s'assurer de manière simple et efficace que la température n'a pas, à un instant donné, franchi une valeur de consigne prédéterminée.

A cet effet, la présente invention concerne un dispositif électronique de suivi de la température d'un milieu à surveiller permettant de s'assurer que la température n'a pas atteint au moins une valeur limite de consigne préétablie, caractérisé en ce qu'il comprend :

- des moyens de contact conducteurs de l'électricité aptes à venir fermer un circuit d'écoulement de charges électriques lorsque ladite température atteint la ou une des valeurs limites de consigne;
- des moyens de stockage de charges électriques susceptibles d'être reliés au circuit d'écoulement de charges lorsque les moyens de contact se ferment, les charges stockées dans ces moyens de stockage étant conservées aussi longtemps que la température n'atteint pas sa ou l'une de ses valeurs limites de consigne, et pouvant s'écouler à travers ledit circuit d'écoulement de charges lorsque ce circuit est fermé par lesdits moyens de contact, lesdits moyens de stockage ne retrouvant pas l'état de charge qui était le leur avant fermeture du circuit d'écoulement des charges si jamais ce dernier venait à nouveau à s'ouvrir, et
- des moyens de lecture permettant de déterminer l'état de charge desdits moyens de stockage.

Grâce à ces caractéristiques, la présente invention procure un dispositif électronique totalement passif permettant de contrôler qu'une température n'a pas subi une élévation au-delà d'un seuil fixé. En effet, pendant toute la période de suivi de la température, le dispositif électronique selon l'invention ne nécessite aucune alimentation en courant ou en tension pour pouvoir fonctionner, seule la phase initiale d'injection des charges électriques dans les moyens de stockage dudit dispositif électronique nécessitant que le dispositif soit alimenté.

Après cette première étape d'écriture dans les moyens de stockage, le dispositif électronique fonctionne donc de manière totalement autonome. Apposé comme témoin sur le produit dont la température est à surveiller, le dispositif électronique conserve son état de charge électrique initial tant que rien ne se passe, c'est-à-dire aussi longtemps que la température n'atteint pas sa valeur critique. Dès que cette valeur est atteinte, les moyens de contact mettent les moyens de stockage en liaison avec le circuit d'écoulement de charges, et les charges stockées dans lesdits moyens de stockage s'échappent instantanément. Ainsi, l'état de charge des moyens de stockage est révélateur de l'évolution de la température durant la période de suivi. Chargés à leur niveau de charge initial, les moyens de stockage indiquent, lors du contrôle, que la température n'a pas subi de variation susceptible d'altérer les qualités du produit à surveiller. Inversement, si l'on constate une modification de l'état de charge des moyens de stockage lors du contrôle, cela signifie qu'à au moins une reprise durant la période de suivi, la température a atteint sa valeur de consigne.

Avantageusement, la modification de l'état de charge des moyens de stockage est irréversible. Si la température a momentanément atteint, par exemple un maximum, et qu'elle repasse à nouveau en-deçà de ce maximum avant que le contrôle ne soit effectué, les moyens de stockage ne retrouvent malgré tout en aucun cas leur état de charge initiale, les charges ne pouvant refluer du circuit d'écoulement de charges vers lesdits moyens de stockage. La présente invention procure donc un dispositif inviolable dont l'enregistrement du franchissement d'une valeur de consigne par la température ne peut être annulé ou modifié.

Enfin, c'est une variation de charge électrique et non, par exemple, un changement de couleur comme tel est le cas dans l'art antérieur, qui indique à l'utilisateur que la température a atteint sa valeur de consigne. Ceci constitue un progrès substantiel dans la mesure où l'appréciation d'une couleur est malaisée et toujours soumise à la subjectivité de l'observateur tel que le consommateur final du produit, tandis qu'une grandeur électrique est un paramètre objectif parfaitement mesurable et quantifiable. En outre, les valeurs d'une grandeur électrique, courant ou tension, peuvent être mémorisées dans un ordinateur et y être conservées indéfiniment, par exemple aux fins d'études statistiques.

Selon une autre caractéristique de l'invention, le dispositif électronique de suivi de la température peut être associé à une étiquette électronique. De telles étiquettes électroniques sont bien connues de l'homme du métier. Elles servent couramment à repérer et à identifier les objets sur lesquels elles sont apposées. De telles étiquettes sont munies d'un dispositif de réception et d'émission d'ondes électromagnétiques couplé avec un module électronique permettant de traiter les signaux reçus et d'en réémettre d'autres pouvant comporter, par exemple, un message d'identification de l'étiquette, et donc de l'objet sur lequel elle est apposée. Par ailleurs, le système comporte un lecteur comprenant un dispositif d'émission/réception d'ondes électromagnétiques pour transmettre des informations entre un terminal de données et ladite étiquette électronique.

Le lecteur remplit plusieurs fonctions, servant notamment à :

- transmettre à l'étiquette l'énergie nécessaire à son fonctionnement, l'étiquette étant dépourvue de source d'énergie autonome spécifique;
- transmettre à l'étiquette des données provenant du terminal, ces données étant éventuellement inscriptibles dans une mémoire dont l'étiquette est pourvue, et
- recevoir des données provenant de l'étiquette et spécifiques à celle-ci, notamment en vue de son identification.

Pour effectuer ces diverses transmissions, le lecteur comporte une ou plusieurs antennes constituées de bobines qui servent pour l'émission et la réception.

L'étiquette comporte également une ou plusieurs antennes de réception des ondes électromagnétiques émises par le lecteur, chacune de ces antennes servant également pour l'émission de données vers le lecteur. En réception, la ou les antennes constituent un moyen de réception par induction de l'énergie provenant du lecteur, ainsi qu'un moyen de réception des données émises par celui-ci. L'antenne est reliée à un processeur comportant les moyens nécessaires à la démodulation des signaux reçus par l'antenne, ainsi qu'au codage et à la modulation des signaux à retransmettre.

L'étiquette fournit, via son antenne, l'énergie nécessaire à l'alimentation des moyens de lecture du dispositif électronique de suivi de température selon l'invention. En outre, grâce à la présence de ces étiquettes, le lecteur peut contrôler simultanément une multiplicité de produits sur lesquels ces étiquettes sont apposées. Il n'est donc plus nécessaire de contrôler les produits un à un. Par ailleurs, comme le lecteur peut lire le message d'identification de chaque étiquette, il peut très aisément déterminer quels sont les articles qui ont été exposés, même momentanément, à une température ayant atteint le seuil critique. Ces produits peuvent alors être rapidement retirés de la chaîne de distribution.

Un autre avantage de l'utilisation conjointe d'une étiquette électronique avec le dispositif de suivi de température réside dans le fait que, comme le contrôle de l'état de charge des moyens de stockage s'opère à distance, le dispositif de suivi peut être disposé à l'intérieur de l'emballage contenant le produit à conserver plutôt que d'être simplement adjoint à l'extérieur dudit emballage.

Ceci constitue un autre avantage important de la présente invention. En effet, les dispositifs de l'art antérieur qui ont besoin d'être visibles pour pouvoir être contrôlés et qui sont donc apposés sur l'emballage extérieur des produits, peuvent indiquer un réchauffement tout à fait momentané qui n'atteint que la partie extérieure et superficielle de l'emballage et qui n'est pas préjudiciable pour le produit à conserver. Un tel procédé risque donc de faire rejeter des quantités importantes de produits non dénaturés.

D'autres fabricants ont proposé de placer un témoin dans chaque paquet surgelé et non plus à l'extérieur de ceux-ci (sur l'emballage) comme décrit ci-dessus. Dans ce cas, c'est le consommateur et uniquement ce dernier qui, en ouvrant l'article surgelé, peut apprécier si le témoin présente son aspect normal, le consommateur pouvant éventuellement être guidé par une note explicative jointe à l'article surgelé.

Outre le fait que l'observation du témoin peut ne pas révéler de manière certaine s'il y a eu ou pas rupture de la chaîne du froid, le consommateur peut se trouver en possession d'aliments impropres à la consommation qu'il aura quand même payés au vendeur. Dans la pratique, ceci est inacceptable.

La présente invention concerne également un procédé de mise en oeuvre du dispositif électronique de suivi de la température du genre susdécrit, caractérisé en ce qu'il consiste à :

- écrire des données par injection de charges électriques dans les moyens de stockage de charges;
- placer le dispositif électronique dans le milieu dont on souhaite suivre l'évolution de la température pour s'assurer que cette température n'atteint pas au moins une valeur limite de consigne préétablie;
- lire, de manière non destructive, alors que le dispositif se trouve encore dans le milieu à surveiller, les données écrites dans les moyens de stockage de charges, de façon à déterminer si la température dudit milieu à surveiller a, à un instant donné, atteint ou non sa ou l'une de ses valeurs limites de consigne préétablies, sachant que si la température n'a pas atteint sa ou l'une de ses valeurs limites de consigne, les moyens de contact ne se sont pas fermés et l'état de charge des moyens de stockage de charges est resté inchangé, tandis que si la température a atteint la ou l'une des valeurs limites de consigne, les moyens de contact se sont fermés et l'état de charge des moyens de stockage de charges a été modifié, cet état modifié de la charge des moyens de stockage de charges étant conservé même si la température du milieu à surveiller passe à nouveau en-deçà ou au-delà de la valeur de consigne qu'elle a atteint et que les moyens de contact s'ouvrent à nouveau;
- poursuivre ou arrêter le suivi de la température et, le cas échéant,

- reprogrammer le dispositif électronique de suivi de la température en vue d'une nouvelle utilisation.

D'autres caractéristiques et avantages de la présente invention ressortiront plus clairement de la description qui suit d'un exemple de réalisation du dispositif de suivi de la température conforme à l'invention, cet exemple étant donné à titre purement illustratif et non limitatif en liaison avec les dessins annexés dans lesquels :

- la figure 1A est une vue en coupe du dispositif de suivi de température selon l'invention comprenant un transistor du type MOS;

- la figure 1B est une représentation schématique du circuit électrique équivalent au dispositif de suivi représenté en coupe à la figure 1A;

- les figures 2A à 2H illustrent la phase de suivi en température au moyen du dispositif de suivi selon l'invention;

- les figures 3A à 3C illustrent la phase d'écriture des charges électriques dans le dispositif de suivi de la température selon l'invention;

- les figures 4A à 4E illustrent le procédé de mise en oeuvre du dispositif de suivi de température représenté aux figures 1A, 1B;

- la figure 5A est une vue en coupe du dispositif de suivi de température selon l'invention comprenant un transistor du type MOS à déplétion;

- la figure 5B est une représentation schématique du circuit électrique équivalent au dispositif de suivi représenté en coupe à la figure 5A;

- les figures 6A à 6D illustrent le procédé de mise en oeuvre du dispositif de suivi de température représenté aux figures 5A, 5B;

- la figure 7A est une vue en coupe du dispositif de suivi de température selon l'invention comprenant une cellule de mémoire à transistor FAMOS;

- la figure 7B est une représentation schématique du circuit électrique équivalent au dispositif de suivi représenté en coupe à la figure 7A;

- les figures 8A à 8D illustrent le procédé de mise en oeuvre du dispositif de suivi de température représenté aux figures 7A, 7B;

- la figure 9A est une vue en coupe du dispositif de suivi de température selon l'invention comprenant une cellule à mémoire à transistor SIMOS;

- la figure 9B est une représentation schématique du circuit électrique équivalent au dispositif de suivi représenté en coupe à la figure 9A;

- les figures 10A à 10D illustrent le procédé de mise en oeuvre du dispositif de suivi de température représenté aux figures 9A, 9B;

- la figure 11A est une vue en coupe du dispositif de suivi de température selon l'invention comprenant une cellule à mémoire programmable et effaçable électriquement EEPROM;

- la figure 11B est une représentation schématique du circuit électrique équivalent au dispositif de suivi représenté en coupe à la figure 11A;

- les figures 12A à 12D illustrent le procédé de mise en oeuvre du dispositif de suivi de température représenté aux figures 11A, 11B;

- la figure 13A est une vue en coupe du dispositif de suivi de température selon l'invention comprenant une cellule à mémoire à injecteur séparé EPLD;

- la figure 13B est une représentation schématique du circuit électrique équivalent au dispositif de suivi représenté en coupe à la figure 13A;

- les figures 14A à 14D illustrent le procédé de mise en oeuvre du dispositif de suivi de température représenté aux figures 13A, 13B;

- la figure 15 illustre le procédé de mise en oeuvre du dispositif de suivi de température de la température conforme à l'invention;

- la figure 16 représente une première forme de réalisation (tige) des moyens de contact du dispositif de suivi de température selon l'invention;

- la figure 17 représente une seconde forme de réalisation (bilame) des moyens de contact du dispositif de suivi de température selon l'invention;

- la figure 18 montre le bilame de la figure 17 dans un état courbé sous l'effet d'une variation de température, et

- la figure 19 est une représentation schématique du bilame utilisé pour déterminer la déflexion de ce dernier sous l'effet d'une variation de température.

La présente invention procède de l'idée générale inventive qui consiste à suivre les fluctuations de la température d'un milieu à surveiller et à s'assurer que cette température n'a pas atteint une valeur seuil prédéterminée au moyen d'un dispositif électronique passif et inviolable dont l'enregistrement du franchissement d'une valeur de consigne au cours de la période de suivi ne peut être annulé ou modifié. Le franchissement, même ponctuel, du seuil de température se traduit instantanément par la modification irréversible de la valeur d'une charge électrique, paramètre qui est aisément mesurable et qui peut être ultérieurement stocké dans la mémoire d'un ordinateur pour y être traité et analysé. Ceci constitue un réel progrès par rapport aux témoins de contrôle de l'art antérieur qui ont la faculté de changer de couleur lorsque la température à surveiller subit une élévation au-delà d'un seuil fixé, dans la mesure où un tel changement de couleur ne fournit pas toujours une indication fiable et est laissé à l'appréciation subjective de l'observateur tel que le consommateur final du produit.

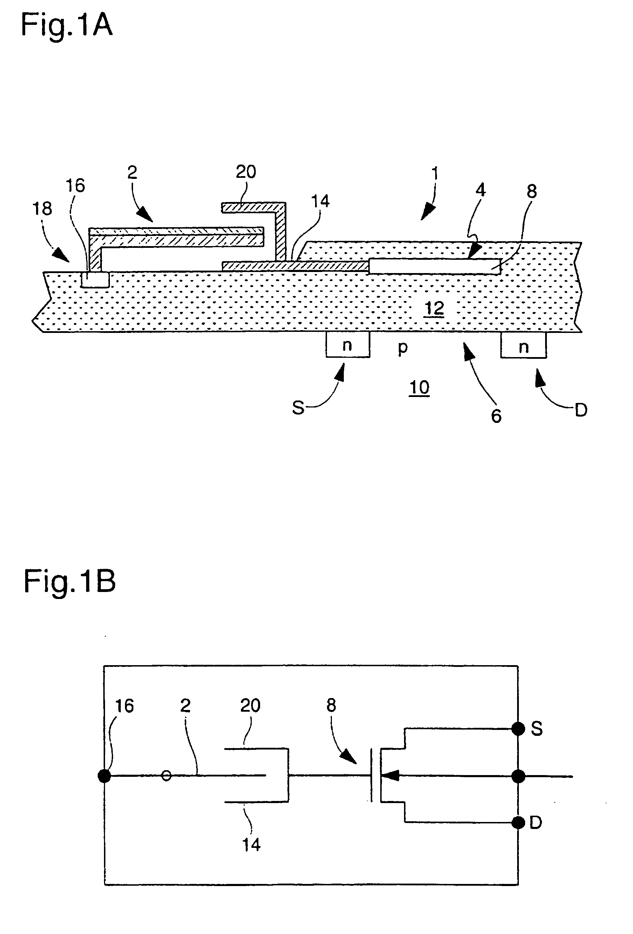

Dans sa forme de réalisation la plus simple (voir figures 1A et 1B), le dispositif de suivi de la température 1 conforme à l'invention comprend essentiellement des moyens de contact 2, des moyens de stockage de charges électriques 4 et des moyens de lecture 6 de l'état de charge des moyens de stockage de charges 4.

Les moyens de contact ou moyens thermocontacts 2 comportent un élément passif qui permet d'établir un contact électrique selon la température du milieu dans lequel il se trouve.

Les phénomènes physiques ou physico-chimiques mis en jeu par les moyens de contact 2 sont, par exemple, la fusion d'un matériau solide. En effet, les moyens de contact 2 peuvent être formés par une matière conduisant l'électricité et présentant une température précise de solidification et de fusion. On comprendra ici que cette matière doit rester à l'état solide aussi longtemps que la température à contrôler n'a pas atteint le seuil que l'on s'est fixé, et doit passer à l'état liquide aussitôt que la température a franchi ce seuil. Un exemple d'un tel matériau est constitué par un mélange d'eau et d'un liquide antigel tel que de l'alcool dont le dosage détermine la température de solidification et de fusion du mélange. Conformément à l'invention, le dispositif électronique 1 de suivi de la température est enfermé dans une ampoule, par exemple en verre, dans laquelle a été préalablement introduit le mélange d'eau et d'alcool. Bien entendu, cette opération est effectuée à une température à laquelle le mélange d'eau et d'alcool est à l'état solide. Après introduction du dispositif électronique 1 dans l'ampoule, cette dernière est hermétiquement scellée, puis apposée sur l'article dont la température est à surveiller.

Les moyens de contact 2 peuvent également mettre en jeu un phénomène de dilatation et de contraction d'un matériau solide en fonction des fluctuations de la température. Il peut s'agir de matériaux métalliques ou d'un alliage de tels matériaux choisis, par exemple, dans le groupe formé par l'aluminium, l'argent, le cuivre, l'acier, le fer, l'invar, le nickel, l'or, le platine, le plomb, le silicium, le tungstène et le zinc.

Selon une première variante de réalisation, les moyens de contact 2 se présentent sous la forme d'une simple barre rectiligne.

Selon une seconde variante de réalisation représentée notamment à la figure 1A, les moyens de contact 2 se présentent sous la forme d'un bilame classiquement constitué de deux lames de métaux ou alliages présentant des coefficients de dilation thermique différents et soudées ensemble, de telle sorte qu'un tel assemblage se courbe lors d'un changement de température. Un exemple de réalisation d'un tel bilame sera présenté en détail à la fin de la présente description.

Selon encore une autre variante de réalisation, les moyens de contact 2 se composent d'un alliage à mémoire de température.

Les moyens de stockage de charges électriques 4 comprennent une armature de condensateur 8 qui, dans toute la suite de la description, sera appelée grille flottante. Cette armature de condensateur ou grille flottante 8 peut, le cas échéant, être associée à un condensateur auxiliaire pour renforcer, si besoin est, son effet capacitif. La grille flottante 8, capable de stocker des charges électriques, est parfaitement isolée électriquement de toute jonction, mais est néanmoins accessible par les moyens de contact 2. Elle est réalisée en un matériau conducteur ou semi-conducteur électriquement isolé et disposé en regard d'un substrat 10 de matériau semi-conducteur formant l'autre armature du condensateur 8. La couche électriquement isolante 12 qui sépare la grille flottante 8 de l'autre armature 10 du condensateur sera, par exemple, réalisée en silice, en nitrure ou en tout autre matériau qui offre un pouvoir d'isolation électrique suffisant. La grille flottante 8 est donc isolée et ne présente aucun courant de fuite pendant toute la durée de la phase de suivi de la température, ce qui exclut la possibilité que cette grille flottante 8 soit connectée à une jonction PN susceptible de présenter des fuites de charges. En effet, pendant la phase de suivi de la température, seuls les moyens de contact 2 sont capables de modifier l'état de charge de la grille flottante 8.

Quant aux moyens de lecture 6, ils se présentent sous la forme d'un dispositif à semi-conducteur associé à la grille flottante 8, de telle sorte que l'état de charge de ladite grille flottante 8 ait une influence directe sur l'état de conduction de ces moyens de lecture 6 et donc sur leur impédance.

Diverses formes de réalisation des moyens de lecture 6 peuvent être envisagées. Selon une première variante (non représentée), la grille flottante 8 peut être couplée avec une jonction PN. Selon son état de charge, la grille flottante 8 module les courants de fuite de la jonction PN et modifie donc l'allure de la caractéristique courant/tension de cette dernière.

Selon une seconde variante de réalisation (également non représentée), la grille flottante 8 est couplée avec un transistor bipolaire dont elle modifie le gain en fonction de son état de charge.

Dans sa forme de réalisation la plus courante représentée à la figure 1A, la grille flottante 8 est associée à un transistor MOS qui peut être à enrichissement ou à déplétion. La grille flottante 8 est susceptible, en fonction de son état de charge, de créer ou de modifier l'état de conduction d'un canal, par exemple de type n, entre la source S et le drain D de ce transistor MOS.

Comme déjà mentionné ci-dessus, la grille flottante 8 est ainsi appelée car elle est électriquement isolée de toute jonction. Conformément à l'invention, la grille flottante 8 présente cependant un point de contact électrique 14 accessible depuis l'extérieur et qui peut être mis en liaison avec un point de contact électrique 16 d'un circuit d'écoulement des charges 18. Une pièce de contact 20 est reliée électriquement à la grille flottante 8 au niveau du point de contact 14 de celle-ci, tandis que les moyens de contact 2 sont connectés au point de contact 16 du circuit d'écoulement des charges électriques 18.

La grille flottante 8 est donc susceptible d'être reliée au circuit d'écoulement des charges 18 lorsque les moyens de contact 2 se ferment et viennent en contact avec la pièce de contact 20. On comprendra que les moyens de contact 2 sont conçus de façon à établir un contact électrique avec la pièce de contact 20 uniquement lorsque la température du milieu à surveiller franchit sa ou l'une de ses valeurs limites de consigne préétablis. Ainsi, les charges stockées dans la grille flottante 8 sont conservées aussi longtemps que la température n'atteint pas sa valeur de consigne, et peuvent s'écouler à travers le circuit d'écoulement des charges 18 lorsque la température atteint sa valeur de consigne et que ledit circuit d'écoulement des charges 18 est fermé par les moyens de contact 2.

Avantageusement, la grille flottante 8 ne retrouve pas l'état de charge qui était le sien avant fermeture du circuit d'écoulement des charges 18 si jamais ce dernier venait à nouveau à s'ouvrir en raison du passage de la température, par exemple en-deçà de son maximum. En effet, les charges sont dans l'impossibilité de refluer du circuit d'écoulement des charges 18 vers la grille flottante 8. La modification de l'état de charge de la grille flottante 8 est donc irréversible, ce qui permet de procurer un dispositif électronique 1 de suivi de la température inviolable dont l'enregistrement du franchissement d'une valeur de consigne par la température ne peut être annulé ou modifié. L'état de charge de la grille flottante 8 est par conséquent révélateur de l'évolution subie par la température durant la période de suivi. Si elle est encore chargée à son niveau de charge initial lors du contrôle, la grille flottante 8 indiquera que la température n'a à aucun moment atteint sa valeur de consigne et que le produit à surveiller n'a subi aucune dégradation susceptible d'altérer ses qualités. Au contraire, si l'on constate une modification de l'état de charge de la grille flottante 8 lors du contrôle, cela signifiera qu'à au moins une reprise la température a atteint sa valeur de consigne.

Comme on l'aura compris de ce qui précède, le dispositif électronique 1 selon l'invention se caractérise par son aptitude à conserver l'état de charge qui est le sien quoi qu'il arrive. Effectivement, soit la température n'a jamais atteint sa valeur de consigne au moment où le contrôle est effectué, et dans ce cas le dispositif de suivi 1 a conservé son état de charge initial. Soit la température a atteint au moins une fois sa valeur de consigne, et dans ce cas l'état de charge du dispositif de suivi 1 est modifié et conservé ultérieurement, quelle que soit l'évolution future de la température.

Dans la cas où l'on a recours par exemple à un mélange d'eau et d'alcool, soit la température n'atteint pas son maximum autorisé et dans ce cas rien ne se passe, c'est-à-dire que le mélange eau/alcool reste solide et ne fond pas. Soit la température atteint, ne serait-ce que momentanément, son maximum, et dans ce cas le mélange d'eau et d'alcool fond. En fondant, le mélange s'écoule sur les points de contact 14 et 16 et connecte électriquement la grille flottante 8 au circuit d'écoulement des charges 18. Par suite, la grille flottante 8 se décharge dans ledit circuit d'écoulement de charges 18 et conserve son état déchargé même si la température passe à nouveau ultérieurement en-deçà de son maximum.

Un bilame présente cependant par rapport à un mélange d'eau et d'alcool l'avantage de permettre de surveiller un produit, par exemple du lait ou du vin, qui doit être conservé dans un froid positif, c'est-à-dire à des températures supérieure à 0°C. En effet, les coefficients de dilatation thermique des métaux ou des alliages de tels métaux utilisés pour réaliser les bilames sont sensiblement constants vis-à-vis de la température et sont indifférents à la transition entre les températures positives et les températures négatives de part et d'autre de 0°C. Il suffit donc de choisir judicieusement les métaux utilisés pour réaliser le bilame de façon à ce que ce dernier se courbe convenablement pour venir fermer le circuit d'écoulement des charges 18 lorsque la température franchit sa valeur limite de consigne.

Le dispositif électronique 1 de suivi de la température selon l'invention comprend enfin les moyens de lecture 6 susmentionnés qui permettent à tout moment, au cours de la période de suivi, de déterminer de façon non destructive l'état de charge de la grille flottante 8.

Dans l'exemple représenté à la figure 1A, le dispositif de suivi 1 de la température comprend un transistor du type MOS dont la grille, électriquement isolée, constitue les moyens de stockage des charges électriques 4, et dont la source S et le drain D, par exemple de type n, constituent les moyens de lecture 6. Pour déterminer l'état de charge de la grille flottante 8, on applique une tension ou un courant aux bornes des moyens de lecture 6 qui, en réponse, fournissent un courant, respectivement une tension, permettant de déterminer la résistance électrique de ces moyens de lecture 6 et donc l'état de charge de ladite grille flottante 8. En effet, le potentiel auquel est porté la grille 8 a une influence directe sur l'état de conduction du canal reliant la source S au drain D du transistor MOS.

La figure 1B est une représentation schématique du circuit électrique équivalent au dispositif de suivi 1 de la température selon l'invention représenté en coupe sur la figure 1A.

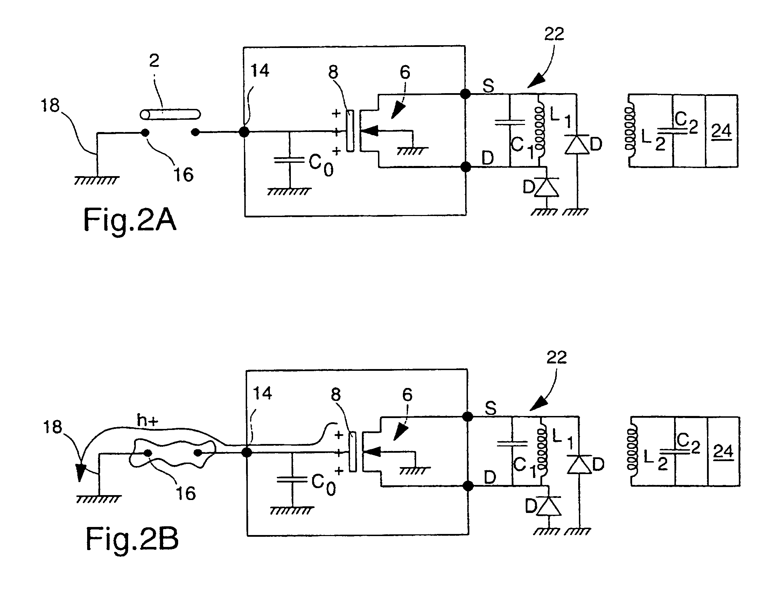

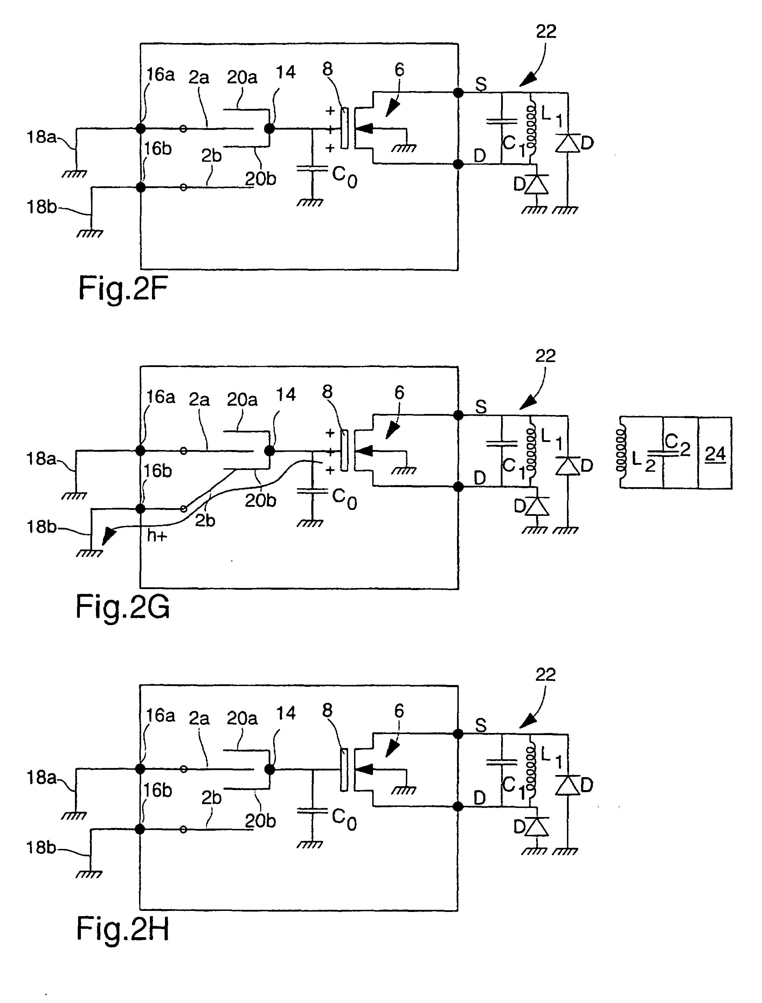

On s'intéresse maintenant, en liaison avec les figures 2A et suivantes, à la phase de suivi de la température, sans pour l'instant se préoccuper de la phase d'injection ou d'écriture des charges électriques dans la grille flottante qui fera l'objet de la suite de la description et qui, comme on le verra, obéit à différents principes.

Comme on peut le voir sur la figure 2A, les moyens de contact 2 sont représentés sous la forme d'un barreau de matière solide susceptible de fondre lorsque la température franchit sa valeur limite de consigne préétablie et de relier électriquement le point de contact électrique 14 de la grille flottante 8 au point de contact électrique 16 du circuit d'écoulement des charges électriques 18. Un condensateur auxiliaire $C_0$ est associé à la grille flottante 8 pour renforcer son effet capacitif.

Afin de pouvoir évaluer l'impédance des moyens de lecture 6 et donc de déterminer l'état de charge de la grille flottante 8, on peut associer à ces moyens de lecture 6 un circuit oscillant 22 formé d'un condensateur $C_1$ et d'une bobine $L_1$ montés en parallèle. Deux diodes D permettent de fixer les extrémités libres du circuit oscillant 22 à un potentiel de référence. On appellera par exemple $Q_C$ le facteur de qualité du circuit oscillant 22 lorsque la grille flottante 8 est chargée. Ce facteur de qualité $Q_C$ est susceptible d'être modifié en fonction de l'impédance des moyens de lecture 6, c'est-à-dire en fonction de l'état de charge de la grille flottante 8.

On prévoit un dispositif d'interrogation à distance 24 comprenant lui aussi un circuit oscillant formant antenne. Ce circuit oscillant 24 se compose d'un condensateur $C_2$ et d'une bobine $L_2$ montés en parallèle. Un tel circuit oscillant 24 est apte à être couplé par ondes électromagnétiques avec les moyens de lecture 6 du dispositif de suivi de température 1 selon l'invention. Un système de ce type est couramment employé avec les étiquettes électroniques pour communiquer à distance.

A la figure 2B, on voit que le barreau de matière solide formant les moyens de contact 2 du dispositif de suivi de température 1 a fondu, ce qui signifie que la température a, à au moins une reprise durant la période de suivi, franchi sa valeur limite de consigne. Les points de contact électrique 14 et 16 sont alors reliés électriquement entre eux par la matière en fusion, ce qui a pour effet de provoquer l'écoulement des charges électriques qui, jusqu'alors, étaient stockées dans la grille flottante 8, dans le circuit d'écoulement des charges 18. La grille flottante 8 étant désormais vidée de ses charges électriques, cela a une influence directe sur le facteur de qualité du circuit oscillant 22 associé aux moyens de lecture 6 qui prend une valeur $Q_D$. Si l'on vient ensuite évaluer l'état de charge du dispositif de suivi 1 au moyen du dispositif d'interrogation à distance 24, le processeur associé à ce dispositif d'interrogation 24 pourra faire la discrimination entre les valeurs $Q_C$ et $Q_D$ du facteur de qualité des moyens de lecture 6 et en conclura que le produit sur lequel ledit dispositif de suivi 1 a été apposé doit être rejeté.

Bien entendu, il n'est pas nécessaire que le contact électrique soit maintenu entre les points de contact 14 et 16 une fois les charges qui étaient stockées dans la grille flottante 8 écoulées. En effet, le fait que le contact électrique entre les points de contact 14 et 16 puisse se rompre lorsque la température passe à nouveau en-deçà de son maximum et que le matériau conducteur se retire de ces points de contact 14 et 16 en se solidifiant est sans effet sur le fonctionnement du dispositif de suivi 1, les charges électriques ne pouvant en aucun cas refluer vers la grille flottante 8.

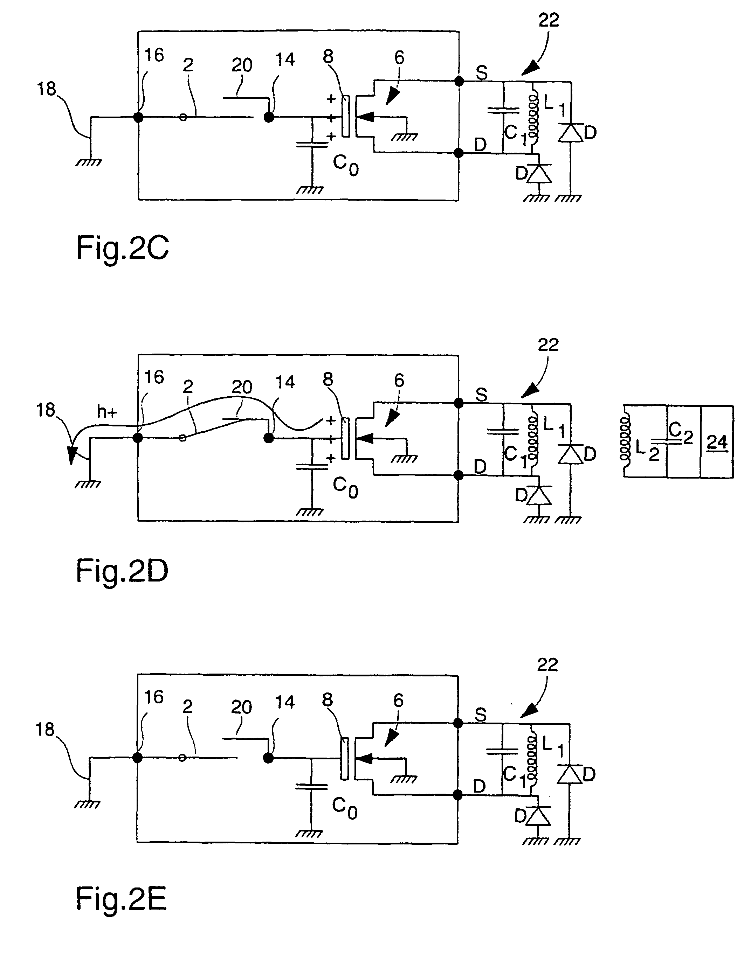

Les figures 2C à 2E sont analogues aux figures 2A et 2B décrites ci-dessus à la différence près que les moyens de contact 2 se composent cette fois ci d'un bilame.

A la figure 2C, le dispositif de suivi de température 1 est représenté en conditions d'utilisation dans lesquelles il est apposé sur le produit à surveiller. Les moyens de contact 2, autrement dit le bilame, sont ouverts, et des charges électriques sont stockées dans la grille flottante, sans possibilité de s'écouler, ce qui signifie que la température n'a encore jamais atteint sa valeur limite de consigne. Si l'on vient, à ce moment là, interroger de manière non destructive le dispositif de suivi 1 au moyen du dispositif d'interrogation à distance 24, on constate que la valeur mesurée du facteur de qualité du circuit oscillant 22 correspond à l'état chargé de la grille flottante 8, soit $Q_C$.

Lorsque la température atteint sa valeur limite de consigne, le bilame 2 vient contacter la pièce de contact 20 (voir figure 2D), mettant ainsi en relation électrique la grille flottante 8 avec le circuit d'écoulement des charges électriques 18. Les charges électriques qui, jusqu'alors, étaient stockées dans la grille flottante 8, vont s'écouler à travers le bilame 2 dans le circuit d'écoulement des charges 18. Si l'on vient ensuite évaluer l'état de charge de la grille flottante 8 au moyen du dispositif d'interrogation à distance 24, on pourra discriminer les valeurs $Q_C$ et $Q_D$ du facteur de qualité du circuit oscillant 22 correspondant respectivement à l'état chargé et à l'état déchargé de ladite grille flottante 8, et en déduire que la température a franchi sa valeur limite de consigne et que le produit auquel le dispositif de suivi de température 1 est associé doit être rejeté.

A la figure 2E, la grille flottante 8 est déchargée et le bilame 2 est ouvert, ce qui signifie que la température est à nouveau passée en-deçà de son seuil limite. Il va néanmoins de soi que, une fois la grille flottante 8 déchargée, celle-ci ne peut plus se recharger ultérieurement, que le bilame 2 reste en contact avec la pièce de contact 20 ou qu'il s'ouvre à nouveau.

Le choix des matériaux employés pour réaliser le bilame 2 est dicté par la valeur de la température limite de consigne que l'on souhaite mesurer. En choisissant judicieusement ces matériaux, on pourra réaliser un bilame 2 qui va se fermer et établir le contact électrique entre la grille flottante 8 et le circuit d'écoulement des charges 18 lorsque la température atteindra sa valeur limite de consigne soit en croissant, soit en décroissant.

Les figures 2F à 2H sont analogues aux figures 2C à 2E décrites ci-dessus à la différence près que l'on utilise deux bilames 2a et 2b qui sont chacun susceptibles de contacter une pièce de contact, respectivement 20a et 20b, selon que la température atteint une valeur limite de consigne inférieure ou une valeur limite de consigne supérieure. Ainsi, à la figure 2G, on voit que le bilame 2b s'est fermé, ce qui signifie, par exemple, que la température à surveiller a atteint sa valeur limite de consigne minimum. On peut donc, avec un tel arrangement, contrôler deux températures distinctes à la fois. Ceci s'avère particulièrement avantageux lorsqu'un arrangement de ce type est utilisé pour la conservation d'un produit tel que du vin dont on sait qu'il supporte tout aussi mal les températures élevées que le froid.

Jusqu'à présent, seule l'utilisation du dispositif de suivi de température 1 conforme à l'invention durant la phase de suivi et de contrôle de la température a été décrite. Cette phase de suivi met en oeuvre :

- des moyens de contact 2 passifs qui permettent d'établir un contact électrique en fonction de la température du milieu dans lequel est disposé le dispositif de suivi 1;
- des moyens de stockage de charges électriques 4 sous la forme d'une grille flottante 8 électriquement isolée de toute jonction et dont l'état de charge électrique est révélateur de l'évolution de la température durant la période de suivi précédant le moment où l'on effectue le contrôle, et
- des moyens de lecture 6 à semi-conducteur dont l'impédance électrique est fonction de l'état de charge de la grille flottante 8 et qui permettent donc de déterminer l'état de charge de cette grille 8.

On s'intéresse maintenant à la phase initiale d'utilisation du dispositif de suivi 1 selon l'invention durant laquelle des charges électriques sont amenées sur la grille flottante 8. Selon la technologie choisie pour réaliser la grille flottante 8, diverses méthodes d'écriture ou de programmation de cette grille 8 peuvent être employées. Plus précisément, la méthode que l'on devra employer pour charger la grille flottante 8 dépendra du fait que l'on utilise, pour réaliser ladite grille 8, une technologie MOS ou bien une technologie mettant en oeuvre des mémoires non volatiles qui sont tout spécialement conçues pour assurer une fonction de rétention de l'information.

D'autre part, les différentes méthodes de programmation de la grille flottante 8 peuvent être destructrices et donc ne pas permettre une réutilisation ultérieure du dispositif de suivi 1, ou bien être non destructrices et permettre dans ce cas un éventuel recyclage dudit dispositif de suivi 1.

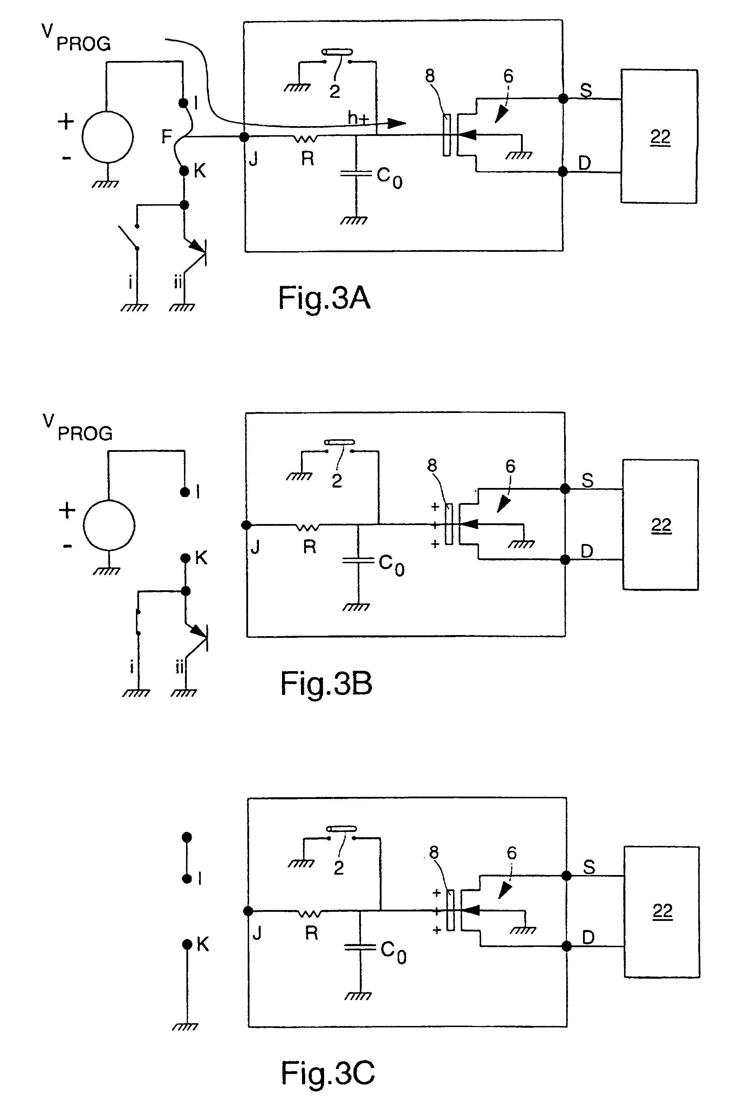

Une première variante de mise en oeuvre du procédé de charge de la grille flottante 8 d'un dispositif de suivi 1 de la température réalisé en technologie MOS ou CMOS est représentée en liaison avec les figures 3A et suivantes. On constate que, conformément à cette première variante, l'injection des charges dans la grille flottante 8 est réalisée tandis que les moyens de contact 2 sont ouverts ou désactivés (on entendra par "désactivé" le fait que les moyens de contact 2 sont rendus momentanément non conducteurs). Par conséquent, la température à surveiller se trouve à une valeur autorisée à laquelle les propriétés du produit à contrôler sont préservées. Comme on peut le voir sur la figure 3A, une tension de charge $V_{PROG}$ est dans un premier temps appliquée à la grille flottante 8 et éventuellement au condensateur auxiliaire $C_0$ qui renforce l'effet capacitif de ladite grille flottante 8 si cet effet n'est pas suffisant en lui-même. Le courant qui vient charger la grille flottante 8 traverse une résistance R qui a pour objet de limiter les pertes lors de la destruction ultérieure d'un fusible F. Dans un second temps (voir figure 3B), on isole la grille flottante 8 de toute connexion électrique avec l'extérieur en forçant un courant suffisamment intense à passer à travers le fusible F de façon à détruire ce dernier. Pour cela, deux solutions différentes sont envisageables. La première solution consiste à fermer un interrupteur i, de sorte qu'un courant intense circule entre le pôle positif de la source de courant et le pôle négatif de celle-ci qui est constitué par la masse à laquelle l'interrupteur i est relié, ce courant traversant le fusible F et le détruisant. La seconde solution consiste à utiliser un transistor ii bipolaire ou MOS, ce transistor ii étant à l'état bloqué durant tout le temps que dure la charge de la grille flottante 8, et étant rendu passant lorsque cette charge est terminée. Le transistor ii joue le même rôle que l'interrupteur i décrit ci-dessus. Il permet à un courant suffisamment intense de traverser le fusible F et de le détruire. Une fois le fusible F détruit, les points I, J et K par lesquels la grille flottante 8 était reliée au circuit de charge extérieur se trouvent parfaitement isolés, de sorte que les charges électriques stockées dans ladite grille flottante 8 ne peuvent s'écouler. Enfin, à la figure 3C, on représente le dispositif de suivi 1 en conditions d'utilisation, des charges électriques étant stockées dans la grille flottante 8 et les moyens de contact 2, représentés sous la forme d'un matériau solide susceptible de fondre au cas où la température franchirait sa valeur limite de consigne, étant ouverts. Comme on l'aura compris, cette première forme de réalisation du dispositif de suivi 1 est à usage unique, la destruction du fusible F empêchant de réutiliser ledit dispositif 1 ultérieurement.

Pour des raisons de commodité et d'intelligibilité de l'invention, les moyens de contact 2 seront, dans tout ce qui suit, présentés sous la forme d'un bilame. Il va toutefois de soi que les principes de fonctionnement et d'utilisation du dispositif électronique 1 selon l'invention restent les mêmes si l'on substituait au bilame le mélange, par exemple d'eau et d'alcool, décrit ci-dessus.

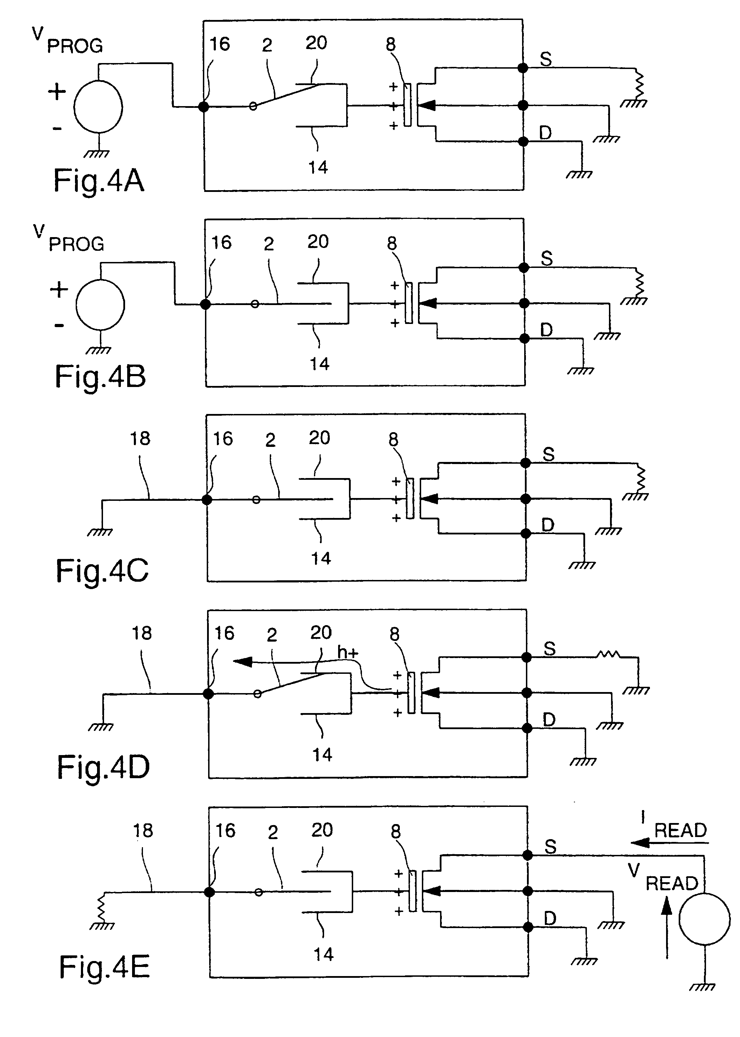

On s'intéresse maintenant au procédé d'utilisation du dispositif 1 de suivi de température représenté sur les figures 1A et 1B en liaison avec les figures 4A à 4E.

Sur la figure 4A est représentée la phase d'injection des charges, encore dite phase d'écriture, dans la grille flottante 8. En examinant la figure 4A, on constate que le bilame 2 est fermé, ce qui signifie que le dispositif de suivi 1 est à une température qui est par exemple supérieure au maximum autorisé pour le produit à contrôler. Une source de tension de programmation $V_{PROG}$ est reliée, par l'intermédiaire du bilame 2, à la grille flottante 8, de façon à y injecter des charges.

Tout en maintenant la tension de programmation, on abaisse ensuite progressivement la température de façon à ce que les moyens de contact 2, autrement dit le bilame, s'ouvrent. Le dispositif de suivi 1 se trouve alors dans la situation représentée à la figure 4B dans laquelle les charges sont stockées dans la grille flottante 8 et le bilame 2 est ouvert, de sorte que les charges stockées ne peuvent s'écouler. La source de tension de programmation $V_{PROG}$ peut alors être déconnectée et le dispositif de suivi 1 est ainsi prêt à être apposé sur le produit qu'il s'agit de surveiller.

A la figure 4C, le dispositif de suivi 1 est représenté en conditions d'utilisation. On voit sur cette figure que des charges sont stockées dans la grille flottante 8 et que le bilame 2 est ouvert. La source S, le drain D et le substrat du transistor MOS sont tous reliés à la masse. Aussi longtemps que le bilame 2 reste ouvert, la grille flottante 8 conserve son état de charge, ce qui signifie que le transistor MOS est conducteur et le demeure tant que le bilame 2 ne se ferme pas.

A la figure 4D, on a représenté le cas où la température du milieu à surveiller a atteint sa valeur de consigne. A ce moment, le bilame 2.se ferme et les charges qui étaient stockées dans la grille flottante 8 s'écoulent via ledit bilame 2 dans le circuit d'écoulement de charges 18, en l'occurrence la masse. Il est important de noter que cette modification de l'état de charge de la grille flottante 8 est irréversible, dans la mesure où il est impossible aux charges électriques de refluer de la masse vers ladite grille flottante 8. Ainsi, même si le bilame 2 s'ouvre à nouveau sous l'effet de la température, l'état déchargé de la grille flottante 8 est conservé.

Sous l'effet de l'écoulement des charges, le transistor MOS devient moins conducteur ou se bloque. Il y a donc modification de la résistance électrique de ce transistor MOS, modification qui peut être décelée en appliquant une tension de lecture $V_{READ}$ ou un courant de lecture $I_{READ}$ entre la source S et le drain D dudit transistor MOS (voir figure 4E) et en mesurant le courant, respectivement la tension, fourni en réponse par le transistor. En effet, le potentiel auquel se trouve la grille flottante 8 a une influence directe sur la résistivité du transistor MOS. Ainsi, selon que la grille 8 est porteuse ou non de charges électriques, la résistivité du transistor MOS variera, ce qui fournit à la personne chargée d'inspecter les produis à surveiller une indication fiable quant au respect de la température de consigne prescrite durant toute la période de suivi de la température précédant l'inspection. Ainsi, si l'on constate que le transistor MOS est bloqué ou moins conducteur, on en déduira que la température a atteint au moins une fois sa valeur de consigne et le produit contrôlé sera immédiatement retiré de la chaîne de distribution. Au contraire, si le contrôle s'avère négatif, c'est-à-dire si le transistor MOS présente sa conductivité initiale correspondant au moment où l'on a injecté les charges dans sa grille 8, le contrôle de la température peut être poursuivi.

En fin d'utilisation, le dispositif de suivi 1 selon l'invention peut être avantageusement réutilisé. Il suffira pour cela de venir à nouveau réinjecter des charges dans la grille flottante 8 selon la procédure décrite ci-dessus. Pour éviter toute tentative de manoeuvre frauduleuse, un microprocesseur sera préférentiellement associé au dispositif de suivi 1, de façon à ce que l'étape d'écriture des données dans la grille flottante 8 obéisse à un algorithme de codage contrôlé par le microprocesseur et dont les clefs de codage ne seront connues que des personnels autorisés.

On a imaginé, ci-dessus, qu'un opérateur était chargé d'inspecter un a un les produits à surveiller. Une telle tâche est bien sûr fastidieuse et ne peut être appliquée à grande échelle. Pour cela, il est préférable d'associer à chaque dispositif de suivi 1 selon l'invention une étiquette électronique. Une telle étiquette qui, en soi, est connue, est par exemple capable de stocker différentes informations telles qu'un numéro de lot et une date de fabrication permettant d'identifier, sans aucun risque d'erreur, le produit sur lequel elle est apposée. L'étiquette peut comprendre des moyens de lecture et d'écriture aptes à modifier les informations stockées dans ladite étiquette. Les moyens d'identification comprennent un circuit électronique intégré et une antenne formée d'une bobine de fils conducteurs. Le circuit intégré comporte des moyens de cryptage, des moyens de conversion de l'énergie récupérée par l'antenne pour assurer l'alimentation électrique du circuit intégré et du dispositif de suivi 1, et une mémoire permanente. On peut ainsi, lors d'un contrôle effectué durant la période de suivi de la température, faire passer simultanément un grand nombre de produits devant un appareil capable, par émission d'un champ électromagnétique, d'alimenter les moyens de lecture 6 du dispositif de suivi 1. En réponse, le circuit intégré va émettre vers l'appareil d'interrogation à distance un signal représentatif de l'état de charge de la grille flottante 8 auquel peuvent être associées des informations identifiant les produits. Ces données sont ensuite enregistrées dans la mémoire d'un ordinateur pour y être conservées et traitées.

Grâce à l'adjonction d'une étiquette électronique au dispositif de suivi 1 selon l'invention, l'étape de lecture de l'état de charge des moyens de stockage de charges 4 peut être réalisée à grande échelle de façon entièrement automatisée et permet de détecter immédiatement et sans risque d'erreur les produits non conformes.

Dans tout ce qui suit, les éléments identiques à ceux décrits précédemment en liaison avec les figures 1A, 1B et 4A à 4E seront désignés par les mêmes références numériques.

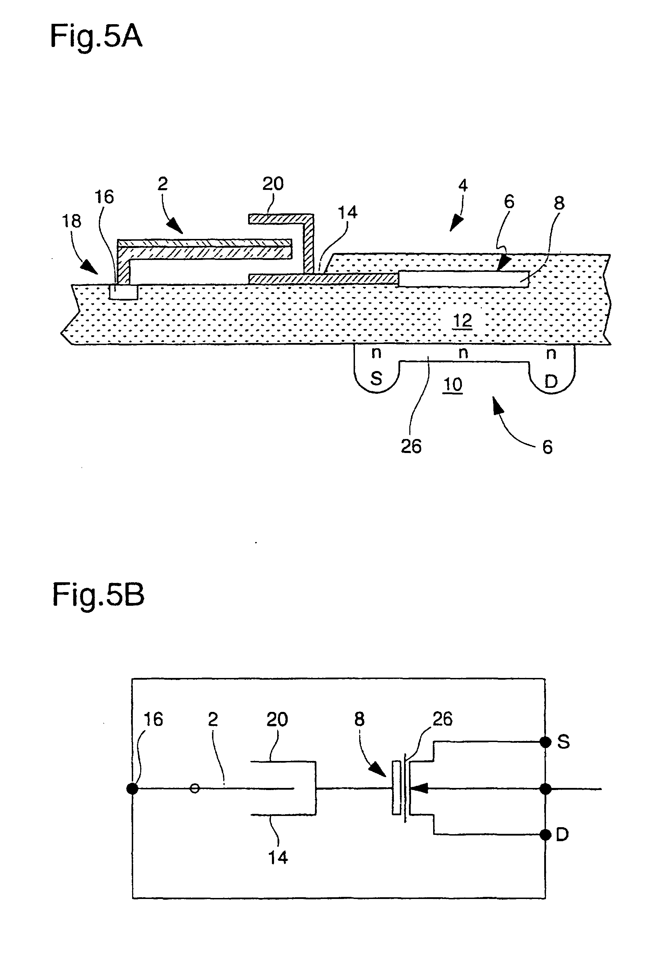

Dans l'exemple représenté à la figure 5A, le dispositif de suivi 1 de la température comprend un transistor du type MOS à déplétion, par exemple à canal n. La grille 8, électriquement isolée, du transistor MOS à déplétion constitue les moyens de stockage des charges électriques conformes à la présente invention, tandis que la source S et le drain D, tous deux de type n, constituent les moyens de lecture 6. La source S et le drain D sont reliés entre eux par un canal 26 également de type n qui existe à l'état de repos.

La figure 5B est une représentation schématique du circuit électrique équivalent au dispositif de suivi 1 de la température selon l'invention représenté en coupe sur la figure 5A. On remarquera en particulier sur cette figure 5B la présence, entre la grille flottante 8 et le substrat, du canal n 26 formé par implantation d'atomes donneurs sous ladite grille 8 au moment du processus de fabrication.

Comme cela est bien connu, un transistor à déplétion est normalement conducteur, c'est-à-dire qu'il faut appliquer une tension appropriée à la grille pour réduire ou annuler le courant de la source au drain par appauvrissement du canal en porteur de charges.

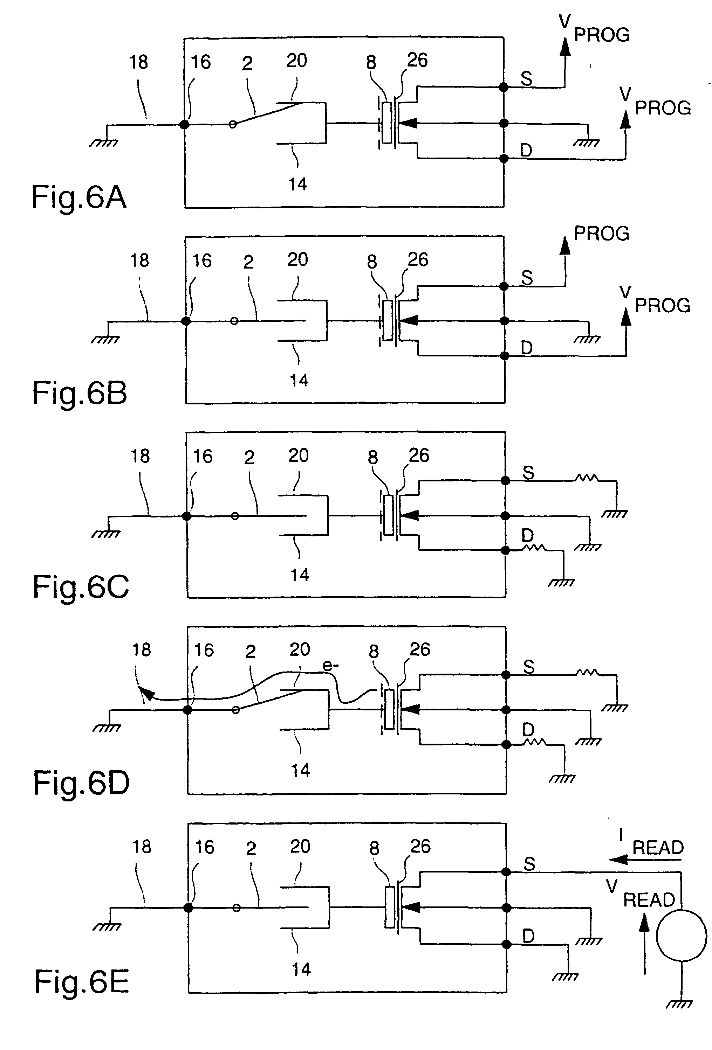

C'est en s'inspirant de ce principe de fonctionnement que l'on va utiliser le transistor MOS à déplétion pour assurer le suivi de la température conformément au procédé selon l'invention. Pour cela, on commence par injecter des charges dans la grille flottante 8 (voir figure 6A). Cette opération est menée en portant le potentiel de la source S et du drain D à une valeur de programmation $V_{PROG}$. Tout le temps que dure cette opération d'écriture d'informations dans la grille 8, les moyens de contact 2 sont fermés, c'est-à-dire que le dispositif de suivi 1 se trouve à une température située en dehors de l'intervalle autorisé défini par les seuils maximum et minimum que la température ne doit pas franchir.

On comprendra que l'injection de charges électriques dans la grille flottante 8 rend le transistor MOS à déplétion moins conducteur (voire le bloque) qu'il ne l'est à l'état de repos.

Ensuite, tout en maintenant la tension de programmation $V_{PROG}$, on ramène progressivement la température dans l'intervalle autorisé où celle-ci est inférieure au seuil maximum et supérieure au seuil minimum. Les moyens de contact 2 s'ouvrent et le dispositif de suivi 1 se trouve alors dans la situation représentée à la figure 6B dans laquelle les charges électriques sont piégées par la grille flottante 8 et ne peuvent s'écouler en direction du circuit d'écoulement de charges 18. La source de tension de programmation $V_{PROG}$ peut maintenant être déconnectée et le dispositif de suivi 1 peut être apposé sur le produit dont la température est à surveiller.

A la figure 6C, le dispositif de 1 de la température est représenté en conditions d'utilisation. La source S, le drain D et le substrat sont reliés à la masse. Les charges électriques, quant à elles, sont stockées dans la grille flottante 8 et ne peuvent s'écouler car le bilame 2 est ouvert. Autrement dit, la température n'est pas passée, par exemple, par son maximum autorisé, et le produit n'a donc pas subi d'altération susceptible de nuire à ses qualités.

Au contraire, à la figure 6D, la température a atteint sa valeur de consigne, ce qui provoque la fermeture du circuit d'écoulement de charges 18 via le bilame 2 et la fuite des charges électriques qui, jusqu'alors, étaient stockées dans la grille flottante 8. Sous l'effet de cette modification de l'état de charge de la grille flottante 8, le transistor MOS à déplétion redevient à nouveau conducteur. En effet, le potentiel auquel se trouve portée la grille 8 a une influence directe sur la conductivité du transistor à déplétion. Il suffit alors d'appliquer, entre la source S et le drain D dudit transistor à déplétion, un courant $I_{READ}$ ou une tension $V_{READ}$ de lecture pour déterminer la conductivité du transistor et en déduire, en fonction des résultats obtenus, l'état de charge de la grille flottante 8. Si le transistor est faiblement conducteur, voire bloqué, cela signifie que les charges électriques sont toujours présentes sur la grille 8 et que la température n'a, à aucun moment, atteint l'une de ses valeurs de consigne. Si, au contraire, le transistor MOS à déplétion est normalement conducteur, cela signifie que les charges électriques qui étaient stockées dans la grille flottante 8 se sont échappées, et que la température a donc, à au moins un instant, franchi sa valeur seuil.

Il est important de rappeler ici que l'état de charge de la grille flottante 8 est conservé quoi qu'il arrive. Soit la température n'a jamais atteint sa valeur de consigne et, dans ce cas, les charges électriques demeurent stockées dans la grille flottante 8, soit la température a atteint sa valeur de consigne, et dans ce cas les charges électriques stockées dans la grille flottante 8 se sont échappées. Lorsque les charges s'échappent, la modification de l'état de charge de la grille 8 est irréversible, même si la température revient en-deçà de sa valeur seuil, car en aucune manière il n'est possible aux charges électriques qui se sont écoulées de refluer à nouveau vers la grille flottante.

Les trois modes de réalisation qui viennent d'être décrits ont deux points en commun : tous deux utilisent la technologie MOS qui consiste en un ensemble d'étapes de conception et de fabrication des composants électroniques qui, aujourd'hui, sont remarquablement bien maîtrisées et permettent d'offrir des dispositifs fiables et peu coûteux. D'autre part, que l'on utilise un transistor MOS standard ou à déplétion, les charges électriques sont injectées dans la grille flottante 8 alors que le bilame 2 est fermé, c'est-à-dire que la température se trouve en-dehors de l'intervalle autorisé. Ceci peut constituer un inconvénient dans la mesure où il faudra, après injection des charges, ramener progressivement la température à une valeur conforme aux conditions de conservation du produit à surveiller avant de pouvoir apposer le dispositif de suivi 1 conforme à l'invention sur ledit produit. Par contre, transistor MOS standard et à déplétion diffèrent en ce que le premier se bloque ou devient moins conducteur lorsque les charges s'échappent de la grille flottante 8, tandis que le second devient à nouveau conducteur dans les mêmes conditions.

Pour remédier à l'inconvénient mentionné ci-dessus, on peut avoir recours à la technologie des composants semi-conducteurs à mémoire non-volatile dont plusieurs exemples vont être décrits ci-dessous.

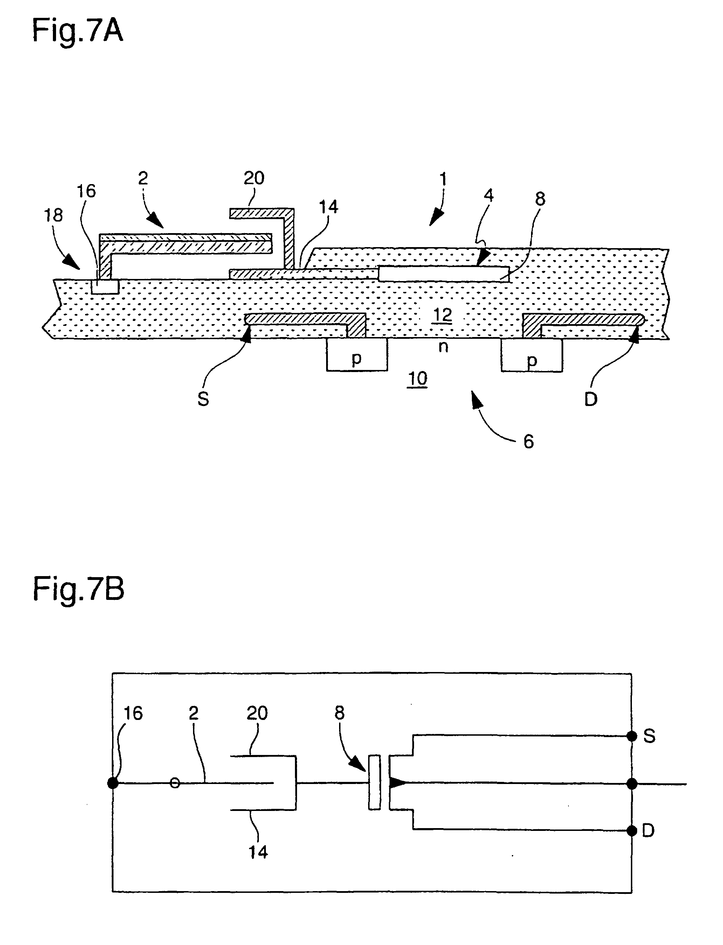

Dans l'exemple représenté à la figure 7A, le dispositif de suivi 1 de la température comprend une cellule de mémoire à transistor FAMOS bien connue sous sa dénomination anglo-saxonne "floating-gate avalanche-injection MOS transistor". Il s'agit d'un transistor MOS comportant une grille flottante 8, c'est-à-dire isolée de tout conducteur, chargée électriquement par effet d'avalanche. La grille 8 du transistor FAMOS constitue les moyens de stockage des charges électriques 4 et la source S et le drain D, par exemple de type p dans un caisson de type n, constituent les moyens de lecture 6.

La figure 7B est une représentation schématique du circuit électrique équivalent au dispositif de suivi 1 de la température selon l'invention représenté en coupe sur la figure 7A.

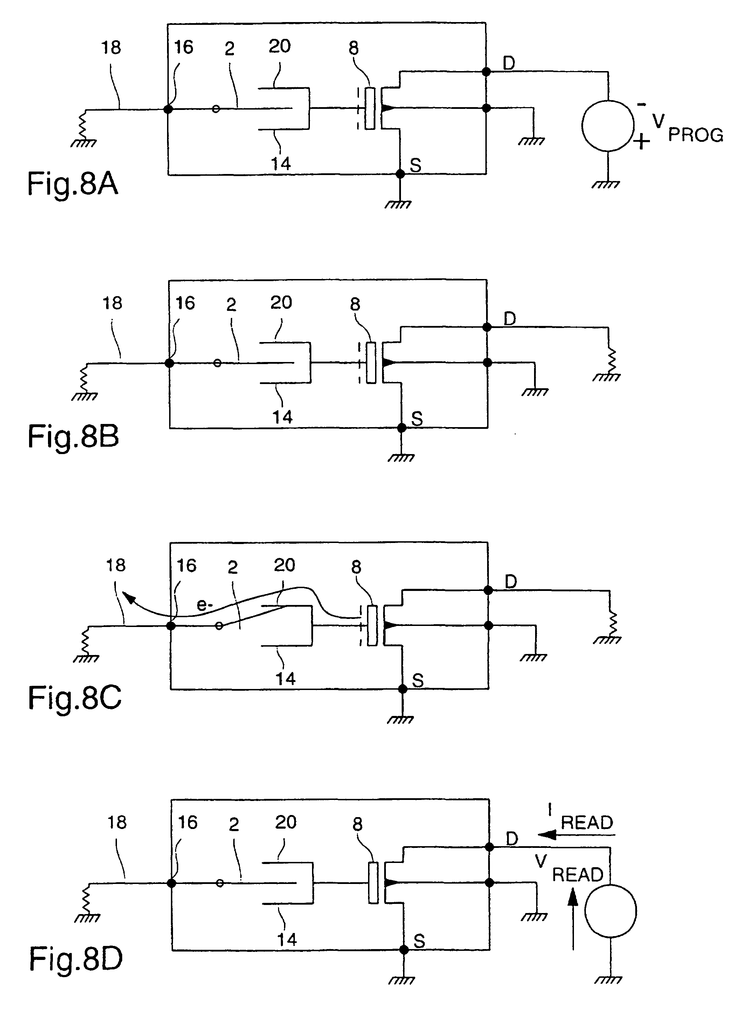

Sur la figure 8A est représentée la phase d'injection, encore dite phase d'écriture, des charges électriques dans la grille flottante 8. En examinant la figure 8A, on constate que le bilame 2 est ouvert, ce qui signifie que le dispositif de suivi 1 se trouve dans un domaine de température autorisé correspondant aux conditions optimales de conservation du produit à surveiller. Une source de tension de programmation $V_{PROG}$ permet d'appliquer une tension négative de l'ordre de vingt à trente volts entre le drain D du transistor FAMOS et la masse. Sous l'effet de la tension de programmation $V_{PROG}$, une avalanche se produit dans la jonction formée par la source S et le drain D du transistor, les porteurs de charge se multipliant à la suite d'une ionisation par choc dans le matériau semi-conducteur. Des électrons chauds, autrement dit des électrons libres qui, dans le matériau semi-conducteur, possèdent une énergie supérieure à celle de l'équilibre thermique du réseau cristallin dudit matériau semi-conducteur, sont alors injectés dans la grille flottante 8 d'où ils ne peuvent s'échapper dans la mesure où le bilame 2 est ouvert et que le chemin vers le circuit d'écoulement des charges électriques 18 leur est interdit.

Une fois les charges écrites dans la grille flottante 8, la tension de programmation $V_{PROG}$ peut être supprimée et le dispositif de suivi 1 être apposé sur le produit à surveiller. Le dispositif de suivi 1 est alors dans la situation représentée à la figure 8B dans laquelle le bilame 2 est ouvert et les charges électriques restent stockées dans la grille flottante 8, de sorte que le transistor FAMOS est potentiellement conducteur et le demeure tant que le bilame 2 ne se ferme pas. L'état chargé de la grille flottante 8 est donc conservé aussi longtemps que la température ne franchit pas sa ou l'une de ses valeurs de consigne.

A la figure 8C, on a représenté le cas où la température du milieu à surveiller a atteint sa valeur de consigne. A ce moment, le bilame 2 se ferme et les charges qui étaient stockées dans la grille flottante 8 s'écoulent via ledit bilame 2 dans le circuit d'écoulement de charges 18. Cette modification de l'état de charge de la grille flottante 8 est irréversible, dans la mesure où les charges électriques ne peuvent être ramenées vers ladite grille 8. Ainsi, même si le bilame 2 s'ouvre à nouveau sous l'effet de la température, l'état déchargé de la grille flottante 8 est conservé.

Sous l'effet de la fuite des charges électriques, le transistor FAMOS devient moins conducteur, voire se bloque. Il y a donc modification de la résistance électrique de ce transistor FAMOS, modification qui peut être détectée en appliquant un courant $I_{READ}$ ou une tension $V_{READ}$ de lecture entre le drain D dudit transistor FAMOS et la masse (voir figure 8D), et en mesurant la tension, respectivement le courant, fourni en réponse par le transistor. En effet, le potentiel auquel se trouve la grille flottante 8 a une influence directe sur la résistivité du transistor FAMOS. Ainsi, selon que la grille 8 est porteuse ou non de charges électriques, la résistivité du transistor FAMOS variera, ce qui fournit une indication précise et fiable quant au respect de la température de consigne prescrite durant toute la période de suivi de la température précédant l'inspection.

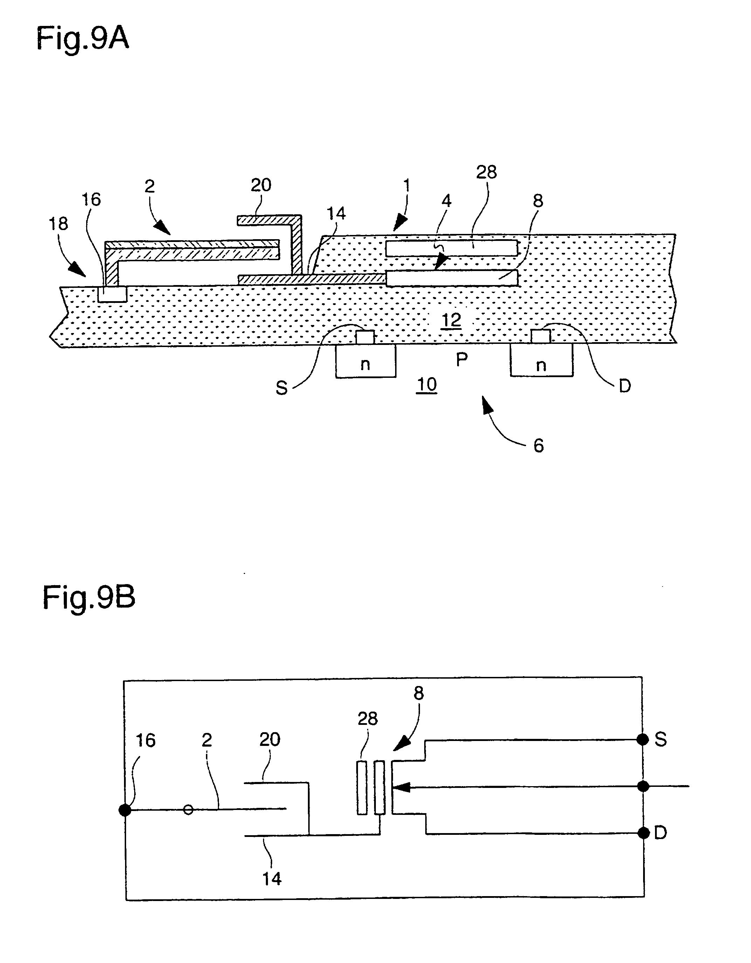

Dans l'exemple représenté à la figure 9A, le dispositif de suivi 1 de la température selon l'invention comprend une cellule de mémoire à transistor SIMOS mieux connue sous sa dénomination anglo-saxonne "stacked-gate injection metal-oxide-semiconductor". La mémoire SIMOS est constituée essentiellement par un transistor comportant une grille de commande 28 et ce qu'on appelle une grille flottante 8 qui est disposée entre la source S et le drain D à la surface d'une couche de $SiO_2$ 12 électriquement isolante recouvrant la surface d'un substrat semi-conducteur 10 et portant la grille de commande 28. La grille flottante 8 reçoit par effet d'avalanche contrôlé par la grille de commande 28 la charge électrique qui lui est affectée. La grille flottante 8 du transistor SIMOS constitue les moyens de stockage des charges 4 et la source S et le drain D, par exemple formés par deux caissons du type n implantés dans un substrat de type p, constituent les moyens de lecture 6.

La figure 9B est une représentation schématique du circuit électrique équivalent au dispositif de suivi 1 de la température selon l'invention représenté en coupe sur la figure 9A. On remarquera la présence de la grille de commande 28 du transistor SIMOS.

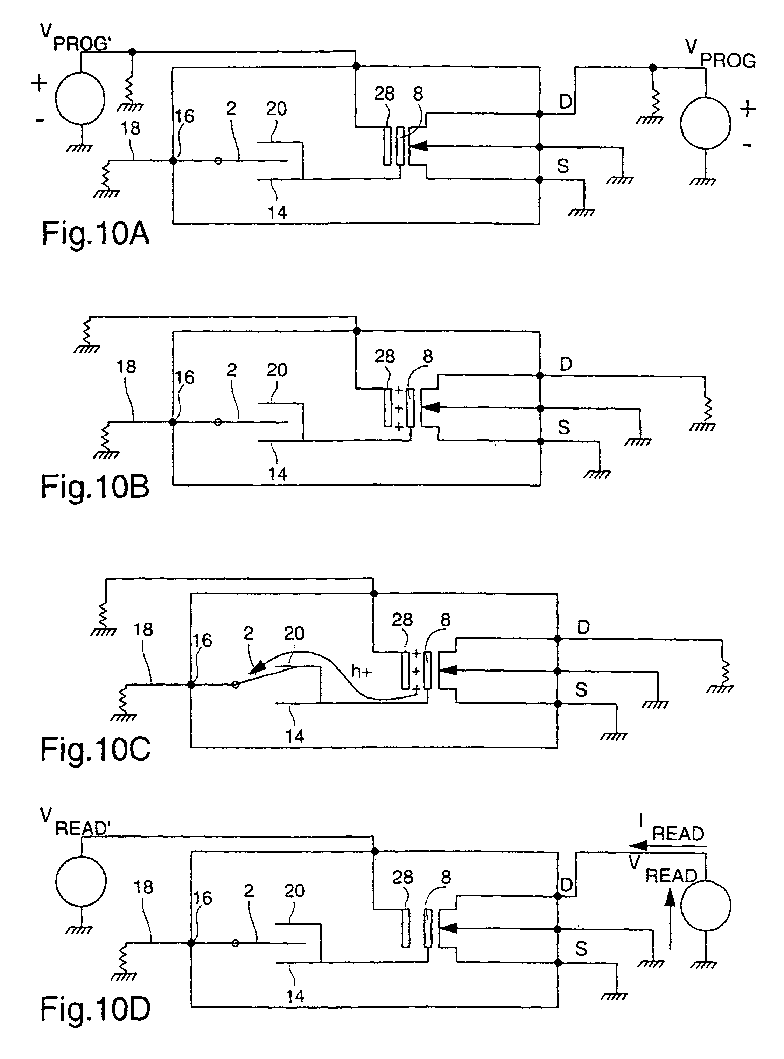

L'étape d'injection ou d'écriture des charges électriques dans la grille flottante 8 d'un transistor SIMOS est représentée à la figure 10A. Cette étape diffère de l'étape d'injection de charges électriques dans la grille flottante 8 d'un transistor FAMOS telle que décrite ci-dessus en liaison avec la figure 8A en ce que, outre la source de tension de programmation $V_{PROG}$ nécessaire à l'injection des charges, il faut avoir recours à une seconde source de tension de programmation $V_{PROG'}$ permettant de polariser la grille de commande 28 qui contrôle l'effet d'avalanche par lequel les charges électriques, en l'occurrence des trous $h^+$, sont injectées dans la grille flottante 8.

Comme dans le cas décrit ci-dessus du transistor FAMOS, l'écriture des données dans une cellule de mémoire à transistor SIMOS se fait alors que les moyens de contact 2 sont ouverts. De même, sous l'effet de l'injection des charges, le transistor SIMOS devient potentiellement conducteur et le demeure aussi longtemps que les moyens de contact 2 ne se ferment pas.

A la figure 10B, les sources de tension de programmation $V_{PROG}$ et $V_{PROG'}$ ont été retirées et la grille de commande 28 est connectée à la masse. Le dispositif de suivi 1 de la température, apposé sur le produit à surveiller, est dans l'état correspondant au cas où la température n'a pas atteint sa valeur de consigne et où le bilame 2 étant ouvert, les charges électriques restent stockées dans la grille flottante 8.

A la figure 10C, on a représenté le cas où la température a atteint sa valeur de consigne et où le bilame 2 se ferme. Les charges qui étaient stockées dans la grille flottante 8 s'écoulent alors à travers le bilame 2 vers le circuit d'écoulement des charges 18. Comme dans tous les exemples qui ont été décrits jusqu'à présent, la modification de l'état de charge de la grille flottante 8 du transistor SIMOS est irréversible, ce qui signifie que l'état déchargé de ladite grille flottante 8 est conservé même si ultérieurement la température passe à nouveau en-deçà de son seuil de tolérance et que le bilame 2 s'ouvre à nouveau.

Sous l'effet de l'écoulement des charges, le transistor SIMOS devient moins conducteur ou se bloque. Il y a donc modification de la résistance électrique de ce transistor SIMOS, modification qui peut être détectée en appliquant un courant $I_{READ}$ ou une tension $V_{READ}$ de lecture entre le drain D dudit transistor SIMOS et la masse (voir figure 10D), et en mesurant la tension, respectivement le courant, fourni en réponse par le transistor. Comme représenté sur la figure 10D, l'étape de lecture de l'état de charge de la grille flottante 8 du transistor SIMOS nécessite de relier la grille de commande 28 de ce transistor à un potentiel de lecture $V_{READ'}$.

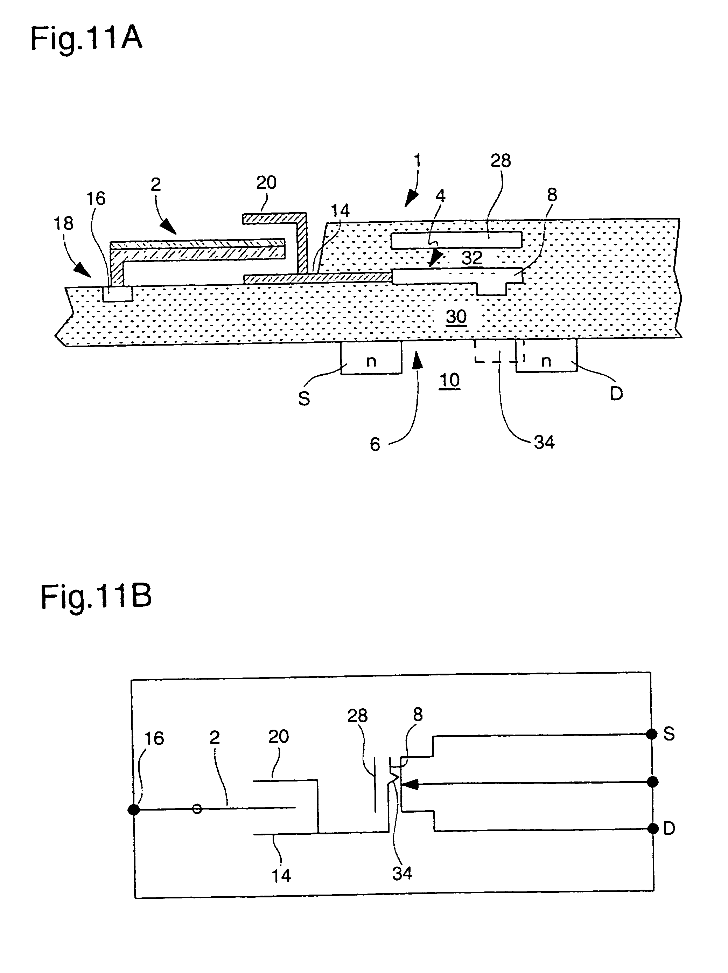

Dans l'exemple représenté à la figure 11A, le dispositif de suivi 1 de la température selon l'invention comprend une cellule à mémoire programmable et effaçable électriquement EEPROM mieux connue sans sa dénomination anglo-saxonne "electrically erasable programmable read-only memory". Une cellule EEPROM est destinée à permettre la rétention non-volatile d'une information. A cet effet, une cellule EEPROM se présente communément sous la forme d'un transistor à effet de champ à grille isolée ou flottante 8, capable d'accumuler des charges électriques et couplée capacitivement à une grille de commande 28. La grille flottante 8, réalisée en polysilicium, est disposée au-dessus du canal du transistor et séparée du substrat 10 par une première couche diélectrique 30. La grille de commande 28 du transistor est couplée capacitivement avec la grille flottante 8 dont elle est séparée par une seconde couche diélectrique 32.

Le potentiel de la grille flottante 8 est déterminé par la tension appliquée sur la grille de commande 28 et le rapport de couplage capacitif de la cellule EEPROM, c'est-à-dire le rapport capacitif entre la capacité formée par la couche diélectrique 32 existant entre la grille de commande 28 et la grille flottante 8, et la capacité formée par la couche diélectrique d'oxyde 30 existant entre la grille flottante 8 et le canal du transistor.

Suivant la combinaison de tensions appliquées sur la grille de commande 28, la couche d'inversion (canal) et les régions de diffusion (régions de source S et de drain D) du transistor, des opérations, notamment de programmation, peuvent être effectuées.

Ainsi, afin d'effectuer une opération de programmation de la cellule EEPROM, c'est-à-dire injecter par exemple des trous $h^+$ sur la grille flottante 8 d'un transistor MOS à canal p (pMOS), une méthode consiste à appliquer une haute tension de programmation à la grille de commande 28 du transistor et à mettre le canal et les régions de source S et de drain D à la masse. Dans ce cas, si le champ électrique dans la couche diélectrique d'oxyde 30 située sous la grille flottante 8 est suffisamment élevée, des trous peuvent être injectés depuis un injecteur ou zone d'injection 34 par effet tunnel dans la grille flottante 8 de la cellule EEPROM.

La figure 11B est une représentation schématique du circuit électrique équivalent au dispositif de suivi 1 de la température selon l'invention représenté en coupe sur la figure 11A. On remarquera sur cette figure la présence de la grille de commande 28 et de l'injecteur 34 du transistor pMOS.

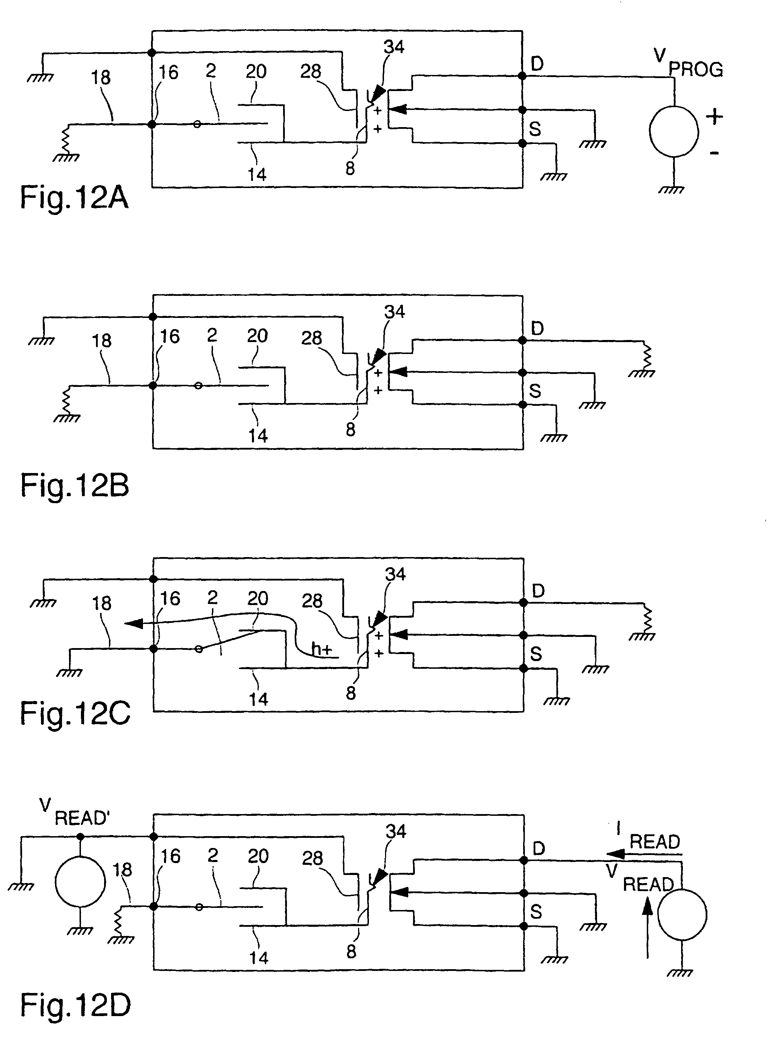

L'étape d'injection ou d'écriture des charges électriques dans la grille flottante 8 de la cellule à mémoire EEPROM est représentée à la figure 12A. Cette étape, qui a été décrite en détail ci-dessus, nécessite de porter le drain D du transistor MOS à un potentiel de programmation $V_{PROG}$. En examinant la figure 12A, on constate que l'étape d'injection des charges se fait alors que le bilame 2 est ouvert, ce qui signifie que la température se trouve à une valeur autorisée correspondant à de bonnes conditions de conservation du produit à surveiller. Sous l'effet de l'injection des charges, le transistor MOS devient conducteur et le reste aussi longtemps que les moyens de contact 2 ne se ferment pas.

A la figure 12B, la source de tension de programmation $V_{PROG}$ a été retirée, le drain D, la source S, le substrat 10 et la grille de commande 28 étant tous reliés à la masse. Le dispositif de suivi 1 de la température, apposé sur le produit à surveiller, est dans l'état correspondant au cas où la température n'a pas atteint sa valeur de consigne et où le bilame 2 étant ouvert, les charges électriques restent stockées dans la grille flottante 8. Cet état chargé de la grille flottante 8 est conservé aussi longtemps qu'il ne se passe rien, c'est-à-dire aussi longtemps que la température n'atteint pas sa valeur de consigne et que le bilame 2 ne se ferme pas.

A la figure 12C, la température a atteint sa valeur de consigne. Sous l'effet de cette variation de température, le bilame 2 s'est fermé et les charges qui, jusqu'alors, étaient stockées sur la grille flottante 8, se sont écoulées dans le circuit d'écoulement de charges 18. Le nouvel état déchargé de la grille flottante 8 est conservé ultérieurement, même si la température revient à une valeur autorisée et que le bilame 2 s'ouvre à nouveau.

Bien entendu, sous l'effet de l'écoulement des charges, le transistor de la cellule de mémoire EEPROM devient moins conducteur, voire se bloque. Il y a donc modification de la résistance électrique de ce transistor qui peut être détectée en appliquant un courant $I_{READ}$ ou une tension $V_{READ}$ de lecture entre le drain D du transistor et la masse (voir figure 12D), et en mesurant la tension, respectivement le courant, fourni en réponse par le transistor. La grille de commande 28 peut être, au choix, connectée à la masse ou à un potentiel de lecture $V_{READ}$, durant la phase de lecture de la cellule à mémoire EEPROM.

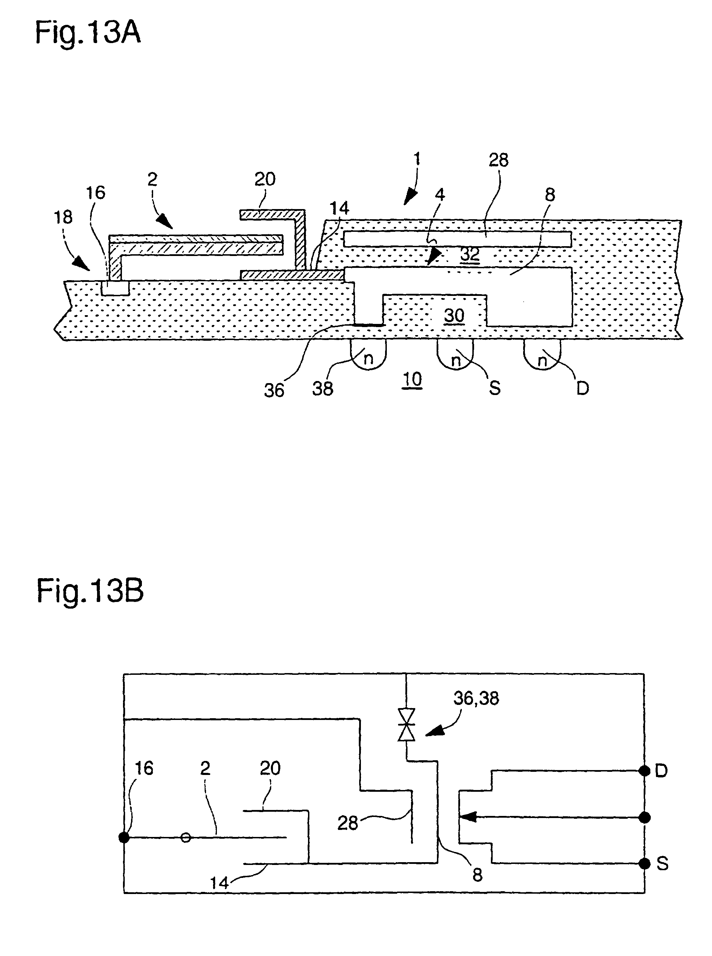

Dans l'exemple représenté à la figure 13A, le dispositif de suivi 1 de la température selon l'invention comprend une cellule à mémoire à iniecteur séparé de type EPLD mieux connue sous sa dénomination anglo-saxonne "electronically programmable logic device". Une cellule à mémoire de type EPLD est destinée à permettre la rétention d'une information. A cet effet, la cellule EPLD comprend un transistor MOS à effet de champ à grille isolée ou flottante 8, capable d'accumuler des charges électriques et couplée capacitivement à une grille de commande 28. La grille flottante 8 est disposée au-dessus du canal du transistor et séparée du substrat semi-conducteur 10 par une couche diélectrique 30. La grille de commande 28 du transistor est couplée capacitivement avec la grille flottante 8 dont elle est séparée par une couche diélectrique 32.

Afin d'effectuer une opération de programmation de la cellule EPLD, c'est-à-dire injecter par exemple des trous h$^+$ sur la grille flottante 8 d'un transistor MOS à canal p (pMOS), une méthode consiste à appliquer une tension de programmation $V_{PROG}$ sur la grille flottante 8 du transistor et à mettre la couche d'inversion (canal) et les régions de diffusion (région de source S et de drain D) à la masse. Dans ce cas, si le champ électrique est suffisamment élevé, des trous peuvent être injectés par effet tunnel à travers une couche d'oxyde 36 située sous la grille flottante 8 depuis une zone d'injection 38 ménagée en regard de la couche d'oxyde 36 dans le substrat 10.

La figure 13B est une représentation schématique du circuit électrique équivalent au dispositif de suivi 1 de la température selon l'invention représenté en coupe sur la figure 13A. On remarquera sur cette figure la présence de la grille de commande 28 et de la couche d'oxyde 36 qui permet l'injection des charges dans la grille flottante 8 par effet tunnel. Cette couche d'oxyde 36 et la zone d'injection 38 qui lui est associée forment une diode de type MIS mieux connue sous sa dénomination anglo-saxonne "metal-insulator-semiconductor".

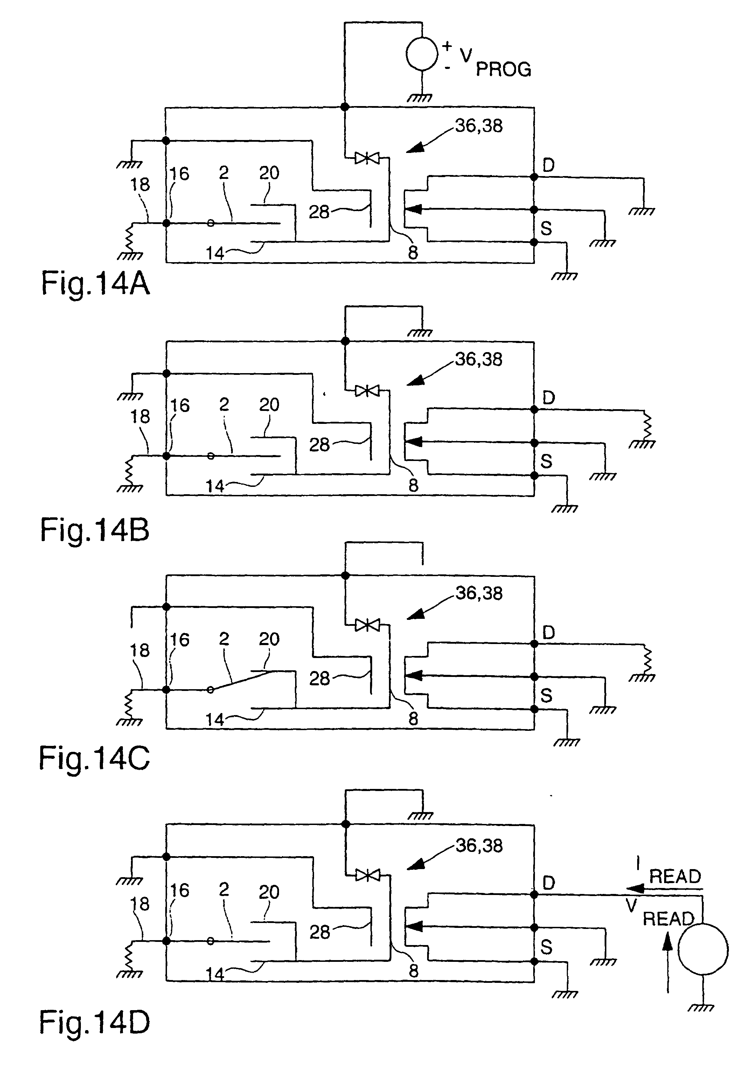

L'étape d'injection des charges électriques dans la grille flottante 8 de la cellule à mémoire EPLD est représentée à la figure 14A. Cette étape, qui a été décrite en détail ci-dessus, nécessite de porter la grille flottante 8 à un potentiel de programmation $V_{PROG}$, tandis que la grille de commande 28 est reliée à la masse. L'étape d'écriture de l'information dans la grille flottante 8 se fait avec le bilame 2 ouvert. Sous l'effet de l'injection des charges, le transistor MOS de la cellule à mémoire EPLD devient conducteur et le reste aussi longtemps que les moyens de contact 2 ne se ferment pas, c'est-à-dire tant que la température n'atteint pas sa valeur de consigne.

A la figure 14B, la source de tension de programmation $V_{PROG}$ a été retirée et l'injecteur par effet tunnel 38 a été relié à la masse. Le dispositif de suivi 1 de la température, apposé sur le produit à surveiller, est dans l'état qui correspond au cas où la température n'a jamais, durant la période de suivi précédant le contrôle, atteint sa valeur de consigne et où les charges électriques restent stockées dans la grille flottante 8 dans la mesure où les moyens de contact 2 ne se sont pas fermés. Cet état chargé de la grille flottante 8 est conservé aussi longtemps qu'il ne se passe rien, c'est-à-dire aussi longtemps que les moyens de contact 2 ne se ferment pas sous l'effet d'un variation de température.

A la figure 14C, le bilame 2 s'est fermé car la température a atteint sa valeur de consigne et les charges électriques se sont échappées de la grille flottante 8 pour s'écouler à travers ledit bilame 2 dans le circuit d'écoulement de charges 18. Sous l'effet de l'écoulement des charges, le transistor MOS de la cellule à mémoire EPLD devient moins conducteur, voire se bloque. Il y a donc modification de la résistance électrique de ce transistor, modification qui peut être détecté en appliquant un courant $I_{READ}$ ou une tension $V_{READ}$ de lecture entre le drain D et la masse (voir figure 14D), et en mesurant la tension, respectivement le courant, fourni par le transistor. Avantageusement, l'étape de lecture de l'état de charge de la grille flottante 8 se fait avec l'injecteur 38 relié à la masse. Bien entendu, l'état déchargé de la grille flottante 8 est conservé même si, ultérieurement, les moyens de contact 2 s'ouvrent à nouveau.

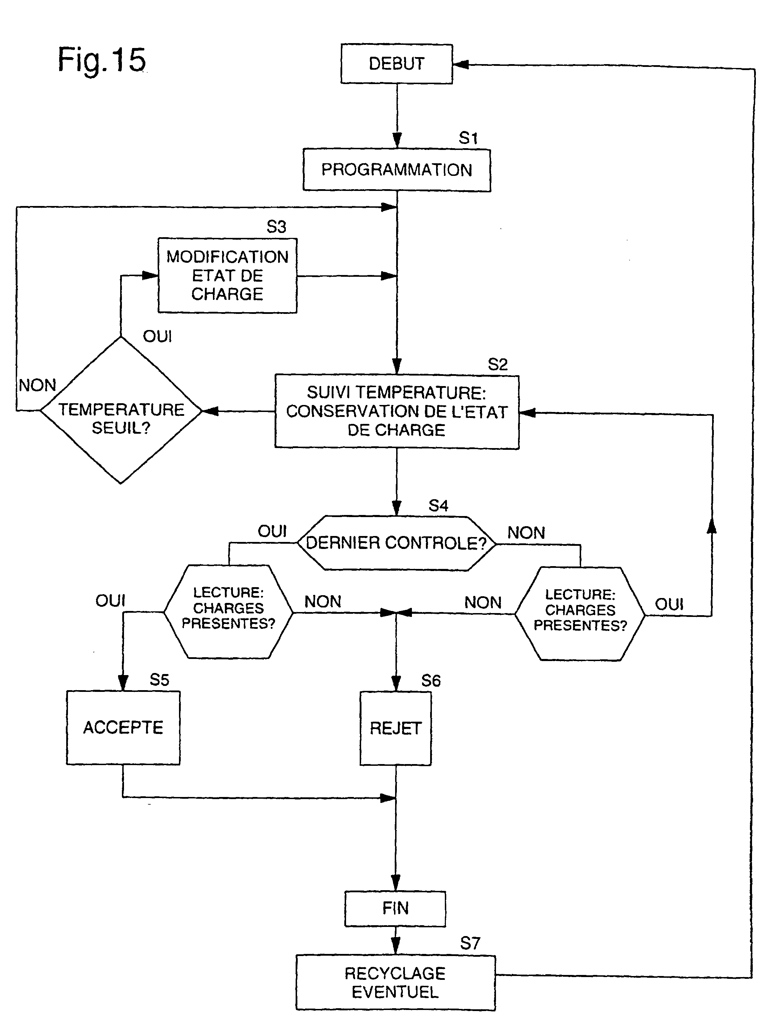

La figure 15 illustre le procédé de mise en oeuvre du dispositif de suivi 1 de la température conforme à l'invention. Le procédé commence à l'étape S1 par la programmation de la grille flottante 8, autrement dit l'étape au cours de laquelle des charges électriques sont injectées dans ladite grille flottante 8. Comme cela a été amplement décrit ci-dessus, l'étape de programmation peut se faire, selon la technologie standard MOS ou la technologie des mémoires non volatiles employée, avec les moyens de contact 2 ouverts ou fermés. Sous l'effet de l'injection des charges dans les moyens de stockage de charges 4, ces derniers peuvent devenir conducteurs ou au contraire se retrouver à l'état bloqué.

Après l'étape S1 d'injection des charges électriques dans les moyens de stockage de charges 4, le dispositif de suivi 1 peut être apposé sur les produits dont la température de conservation doit être contrôlée. Débute alors l'étape S2 de suivi de la température au cours de laquelle l'état de charge des moyens de stockage de charges 4 est susceptible d'être modifié. Ainsi, si comme cela est représenté à l'étape S3, la température a atteint sa valeur de seuil, il y a modification irréversible de l'état de charge des moyens de stockage. Il est essentiel de bien comprendre que cet état modifié de la charge des moyens de stockage 4 sera conservé qu'elle que soit l'évolution ultérieure de la température. Ainsi, même si la température passe à nouveau en-deçà de son maximum autorisé et que, par conséquent, les moyens de contact 2 s'ouvrent à nouveau, cela ne permettra pas aux moyens de stockage 4 des charges électriques de retrouver leur niveau de charge initial. Bien entendu, l'état chargé des moyens de stockage de charges 4 est également conservé durant toute la période de suivi de la température lorsque cette température n'atteint à aucun moment sa valeur de consigne. Si, à l'étape S4, le dernier contrôle est effectué, il faut s'assurer que les charges électriques sont encore présentes sur la grille flottante 8. Si tel est le cas (étape S5), cela signifie que la température n'a jamais atteint sa ou l'une de ses valeurs limites de consigne et que les propriétés du produit sur lequel le dispositif de suivi 1 a été apposé n'ont pas été altérées. Si, au contraire, les charges sont absentes (étape S6), le produit doit être rejeté. Si l'étape S4 ne correspond pas au dernier contrôle, il faut néanmoins également s'assurer que les charges électriques sont présentes. Si tel n'est pas le cas, le produit doit être immédiatement rejeté (étape S6). Par contre, si les charges sont toujours présentes sur la grille flottante 8, la procédure de suivi de la température peut être poursuivie et l'on revient à l'étape S2. A l'issue du dernier contrôle (étape S4), que le produit soit finalement accepté (étape S5) ou rejeté (étape S6), on arrive à la fin de la procédure de suivi de la température et le dispositif de suivi 1 selon l'invention peut être éventuellement recyclé (étape S7).

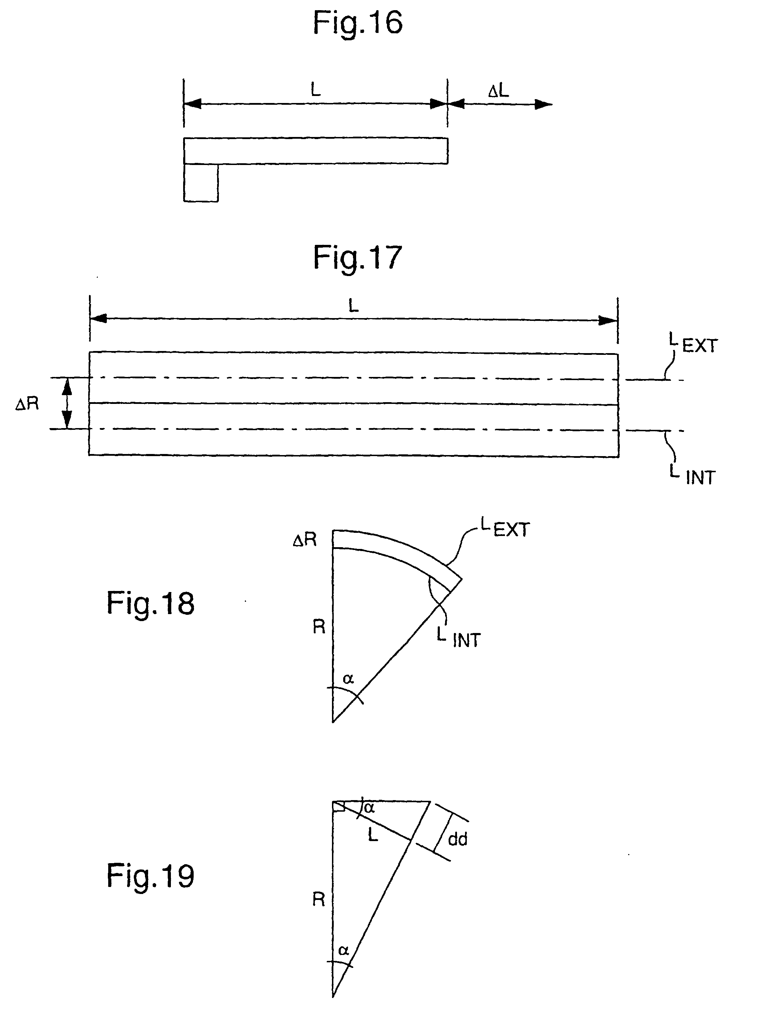

On s'intéresse enfin, en liaison avec les figures 16 et suivantes, à des modes de réalisation des moyens de contact 2 dont la fermeture provoque la mise en liaison de la grille flottante 8 avec le circuit d'écoulement des charges électriques 18.

A la figure 16, les moyens de contact 2 sont constitués par une simple tige d'aluminium dont le coefficient de dilatation linéique avec la température est égal à $\delta = 25.10^{-6} m/°K$. Un allongement $\Delta L$ sous l'effet d'une variation de température $\Delta T$ de la barre d'aluminium de longueur L est défini par la relation : $\Delta L$

$$\Delta L = L \times \delta \times \Delta T \qquad (1)$$

En supposant que l'on recherche un allongement $\Delta L = 0,1\mu m$ pour une variation de température $\Delta T = 1°K$, la longueur L de la barre d'aluminium devra être

de :

$$L = \frac{\Delta L}{\delta \times \Delta T} = \frac{0,1 \times 10^{-6}}{25 \times 10^{-6}} = 4.10^{-3} m = 4mm$$

Il faut donc prévoir une tige d'aluminium de 4mm de longueur pour pouvoir observer un allongement de cette tige de 0,1 µm lorsque la température s'élève de 1°K.

A la figure 17, on suppose que les moyens de contact 2 sont constitués par un bilame formé de deux lames accolées d'une longueur de 100µm chacune et réalisée l'une en aluminium par exemple, dont le coefficient de dilatation linéique est $\delta_{Al} = 25.10^{-6}$ m/°K, et l'autre en silicium par exemple, dont le coefficient de dilatation linéique est $\delta_{si} = 3.10^{-6}$ m/°K. La longueur de 100µm est choisie arbitrairement, mais est une valeur habituelle dans le domaine de la fabrication des circuits intégrés.

Comme représenté sur la figure 17, on appelle $L_{INT}$ et $L_{EXT}$ les lignes de symétrie longitudinales de la lame en aluminium et de la lame en silicium respectivement, distantes d'une longueur $\Delta R = 1\mu m$.

A la figure 18, on suppose que le bilame s'est courbé du côté de la lame en silicium. On désigne par R le rayon de courbure selon lequel le bilame s'est courbé, et $\alpha$ l'angle qui intercepte l'arc de cercle formé par ledit bilame courbé. On obtient alors :

$$L_{INT} = \alpha R \qquad (2)$$

$$L_{EXT} = \alpha(R + \Delta R) \qquad (3)$$

d'où

$$\frac{L_{EXT}}{L_{INT}} = \frac{\alpha \ (R + \Delta R)}{\alpha R} = 1 + \frac{\Delta R}{R} \qquad (4)$$

En supposant que le bilame se soit courbé sous l'effet d'une variation de la température de 1°K, la relation (4) définie ci-dessus devient :

$$\frac{L_{EXT}}{L_{INT}} = \frac{100 + 100 \times 25.10^{-6}}{100 + 100 \times 3.10^{-6}} = 1,000022 = 1 + \frac{\Delta R}{R}$$

Or $\Delta R = 1 \mu m = 10^{-6} m$, d'où :

$$R = \frac{10^{-6}}{22 \times 10^{-6}} = 0,045m = 45454\mu m$$

Le rayon de courbure du bilame est donc égal

à R = 45454 μm.

On cherche maintenant, en liaison avec la figure 19, à déterminer la déflexion, notée dd, du bilame pour une variation de température de 1°K :

$$dd = L\sin\alpha = L \times \frac{L}{R} = \frac{100 \times 100}{45454} = 0,22\,\mu m/°K$$

Par conséquent, pour un bilame formé de deux lames d'aluminium et de silicium d'une longueur de 100μm chacune, on observe une courbure de 0,22μm pour une élévation de la température de 1°K.

Il va de soi que l'invention n'est pas limitée aux modes de réalisation qui viennent d'être décrits, et que des modifications et des variantes simples peuvent être envisagées sans sortir du cadre de la présente invention.

## Revendications

1. Dispositif électronique de suivi de la température d'un milieu à surveiller permettant de s'assurer que la température n'a pas atteint au moins une valeur limite de consigne préétablie, ce dispositif comprenant des moyens de stockage de charges électriques (4) dans lesquels les charges stockées sont conservées aussi longtemps que la température n'atteint pas sa ou l'une de ses valeurs limites de consigne, et pouvant s'écouler lorsque la température atteint sa ou l'une de ses valeurs limites de consigne, ledit dispositif étant **caractérisé en ce qu'**il comprend en outre :

   - des moyens de contact (2) conducteurs de l'électricité aptes à venir fermer un circuit d'écoulement de charges électriques (18) lorsque ladite température atteint sa ou l'une de ses valeurs limites de consigne;
   - les moyens de stockage de charges électriques (4) étant susceptibles d'être reliés au circuit d'écoulement de charges (18) lorsque les moyens de contact (2) se ferment, les charges stockées dans lesdits moyens de stockage pouvant s'écouler à travers le circuit d'écoulement de charges (18) lorsque ce circuit est fermé par lesdits moyens de contact (2), les moyens de stockage (4) ne retrouvant pas l'état de charge qui était le leur avant fermeture du circuit d'écoulement des charges (18) si ce dernier venait à nouveau à s'ouvrir, et
   - des moyens de lecture (6) permettant de déterminer l'état de charge desdits moyens de stockage de charges (4).

2. Dispositif électronique selon la revendication 1, **caractérisé en ce que les** moyens de stockage de charges (4) comprennent une grille flottante (8) séparée d'un substrat semi-conducteur (10) par une couche électriquement isolante (12), la grille flottante (8) présentant un point de contact électrique (14) accessible depuis l'extérieur et qui peut être mis en liaison avec un point de contact électrique (16) du circuit d'écoulement de charges (18).

3. Dispositif électronique selon l'une quelconque des revendications 1 ou 2, **caractérisé en ce que**, afin de pouvoir évaluer l'impédance des moyens de lecture (6) et donc de déterminer l'état de charge de la grille flottante (8), un circuit oscillant (22) est associé à ces moyens de lecture (6), un dispositif d'interrogation à distance (24) pouvant être couplé avec lesdits moyens de lecture (6).

4. Dispositif électronique selon l'une quelconque des revendications 2 ou 3, **caractérisé en ce que** les moyens de lecture (6) comprennent une jonction pn réalisée au moins en partie sous la grille flottante.

5. Dispositif électronique selon l'une quelconque des revendications 2 ou 3, **caractérisé en ce que** les moyens de lecture (6) comprennent un transistor bipolaire réalisé au moins en partie sous la grille flottante.

6. Dispositif électronique selon l'une quelconque des revendications 1 à 5, **caractérisé en ce qu'**il comprend un transistor du type MOS dont la grille (8), électriquement isolée, constitue les moyens de stockage (4), et dont la source (S) et le drain (D) constituent les moyens de lecture.

7. Dispositif électronique selon la revendication 6, **caractérisé en qu'il** comprend un transistor du type MOS à déplétion.

8. Dispositif électronique selon l'une quelconque des revendications 1 ou 2, **caractérisé en ce que** les moyens de stockage (4) et de lecture (6) comprennent une cellule de mémoire à semi-conducteur non volatile.

9. Dispositif électronique selon la revendication 8, **caractérisé en ce que** la cellule de mémoire à semi-conducteur est choisie dans le groupe formé par les cellules du type FAMOS, les cellules du type SIMOS, les cellules du type EEPROM et les cellules à mémoire avec injecteur séparé du type EPLD.

10. Dispositif électronique selon l'une quelconque des revendications 1 à 9, **caractérisé en ce que** les moyens de contact (2) sont formés par une matière conduisant l'électricité et possédant une température précise de solidification et de fusion.

11. Dispositif électronique selon la revendication 10, **caractérisé en ce que le** matériau conducteur de l'électricité est un mélange d'un liquide antigel et d'eau dont le dosage détermine la température de solidification et de fusion du mélange.

12. Dispositif électronique selon la revendication 11, **caractérisé en ce que le** liquide antigel est de l'alcool.

13. Dispositif électronique selon l'une quelconque des revendications 1 à 9, **caractérisé en ce que** les moyens de contact (2) sont réalisés en un matériau métallique susceptible de se dilater ou de se contracter en fonction des fluctuations de la température.

14. Dispositif électronique selon la revendication 13, **caractérisé en ce que** le matériau métallique est choisi dans le groupe formé par l'aluminium, l'argent, le cuivre, l'acier, le fer, l'invar, le nickel, l'or, le platine, le plomb, le silicium, le tungstène et le zinc.

15. Dispositif électronique selon l'une quelconque des revendications 13 ou 14, **caractérisé en ce que** les moyens de contact (2) se présentent sous la forme d'une barre rectiligne.

16. Dispositif électronique selon l'une quelconque des revendications 13 ou 14, **caractérisé en ce que** les moyens de contact (2) se présentent sous la forme d'un bilame.

17. Dispositif électronique selon l'une quelconque des revendications 1 à 16, **caractérisé en ce qu'**il est associé à une étiquette électronique.

18. Procédé de mise en oeuvre du dispositif électronique de suivi de la température selon l'une quelconque des revendications précédentes, **caractérisé en ce qu'**il consiste à :

- écrire des données par injection de charges électriques dans les moyens de stockage de charges (4);
- placer le dispositif électronique (1) dans le milieu dont on souhaite suivre l'évolution de la température pour s'assurer que cette température n'atteint pas au moins une valeur limite de consigne préétablie;
- lire, de manière non destructive, alors que le dispositif (1) se trouve encore dans le milieu à surveiller, les données écrites dans les moyens de stockage de charges (4), de façon à déterminer si la température dudit milieu à surveiller a, à un instant donné, atteint ou non sa ou l'une de ses valeurs limites de consigne préétablies, sachant que si la température n'a pas atteint sa ou l'une de ses valeurs limites de consigne, les moyens de contact (2) ne se sont pas fermés et l'état de charge des moyens de stockage de charges (4) est resté inchangé, tandis que si la température a atteint la ou l'une des valeurs limites de consigne, les moyens de contact (2) se sont fermés et l'état de charge des moyens de stockage de charges (4) a été modifié, cet état modifié de la charge des moyens de stockage de charges (4) étant conservé même si la température du milieu à surveiller passe à nouveau en-deçà ou au-delà de la valeur limite de consigne qu'elle a atteint et que les moyens de contact (2) s'ouvrent à nouveau;
- poursuivre ou arrêter le suivi de la température et, le cas échéant,
- reprogrammer le dispositif électronique de suivi de la température (1) en vue d'une nouvelle utilisation.

19. Procédé selon la revendication 18, **caractérisé en ce que** l'étape d'écriture des données par injection de charges électriques dans les moyens de stockage de charges (4) se fait alors que les moyens de contact (2) sont fermés.

20. Procédé selon la revendication 18, **caractérisé en ce que** l'étape d'écriture des données par injection de charges électriques dans les moyens de stockage de charges (4) se fait alors que les moyens de contact (2) sont ouverts.

21. Procédé selon l'une quelconque des revendications 18 à 20, **caractérisé en ce que** l'étape de lecture des données écrites dans les moyens de stockage de charges électriques (4) se fait par application d'un courant ou d'une tension électrique aux bornes desdits moyens de stockage de charges (4) qui, en réponse, fournissent une tension, respectivement un courant permettant de déterminer la résistance électrique de ces moyens de stockage (4) et donc leur état de charge électrique.

**Patentansprüche**

1. Elektronische Vorrichtung zum Verfolgen der Temperatur einer zu überwachenden Umgebung, mit der sichergestellt werden kann, dass die Temperatur zumindest einen im Voraus gesetzten Grenzeinstellwert nicht erreicht hat, wobei diese Vorrichtung Mittel (4) zum Speichern elektrischer Ladungen umfasst, in denen die gespeicherten Ladungen solange gehalten werden, wie die Temperatur ihren oder einen ihrer Grenzeinstellwerte nicht erreicht, und abfließen können, wenn die Temperatur ihren oder einen ihren Grenzeinstellwerte erreicht, wobei die Vorrichtung **dadurch gekennzeichnet ist, dass** sie außerdem umfasst:

- elektrisch leitende Kontaktmittel (2), die einen Kreis (18) zum Abfließenlassen elektrischer Ladungen schließen können, wenn die Temperatur ihren oder einen ihrer Grenzeinstellwerte erreicht;

- wobei die Mittel (4) zum Speichern elektrischer Ladungen mit dem Kreis (18) zum Abfließenlassen elektrischer Ladungen verbunden werden können, wenn die Kontaktmittel (2) schließen, wobei die in den Speichermitteln gespeicherten Ladungen durch den Kreis (18) zum Abfließenlassen elektrischer Ladungen abgeleitet werden können, wenn dieser Kreis durch die Kontaktmittel (2) geschlossen wird, wobei die Speichermittel (4) ihren Ladungszustand, den sie vor dem Schließen des Kreises (18) zum Abfließenlassen elektrischer Ladungen hatten, nicht wieder einnehmen können, falls dieser Kreis (18) zum Abfließenlassen elektrischer Ladungen erneut geöffnet wird, und

- Lesemittel (6), die ermöglichen, den Ladungszustand der Mittel (4) zum Speichern von Ladungen zu bestimmen.

2. Elektronische Vorrichtung nach Anspruch 1, **dadurch gekennzeichnet, dass** die Mittel (4) zum Speichern von Ladungen ein floatendes Gate (8) umfassen, das von einem Halbleitersubstrat (10) durch eine elektrisch isolierende Schicht (12) getrennt ist, wobei das floatende Gate (8) einen elektrischen Kontaktpunkt (14) aufweist, auf den von außen zugegriffen werden kann und der mit einem elektrischen Kontaktpunkt (16) des Kreises (18) zum Speichern elektrischer Ladungen verbunden werden kann.

3. Elektronische Vorrichtung nach einem der Ansprüche 1 oder 2, **dadurch gekennzeichnet, dass** für die Möglichkeit der Bewertung der Impedanz der Lesemittel (6) und daher für die Bestimmung des Ladungszustandes des floatende Gates (8) diesen Lesemitteln (6) eine Oszillationsschaltung (22) zugeordnet ist, wobei mit den Lesemitteln (6) eine Fernabfragevorrichtung (24) gekoppelt werden kann.

4. Elektronische Vorrichtung nach einem der Ansprüche 2 oder 3, **dadurch gekennzeichnet, dass** die Lesemittel (6) einen pn-Übergang aufweisen, der wenigstens teilweise unter dem floatenden Gate verwirklicht ist.

5. Elektronische Vorrichtung nach einem der Ansprüche 2 oder 3, **dadurch gekennzeichnet, dass** die Lesemittel (5) einen Bipolartransistor aufweisen, der wenigstens teilweise unter dem floatenden Gate verwirklicht ist.

6. Elektronische Vorrichtung nach einem der Ansprüche 1 bis 5, **dadurch gekennzeichnet, dass** sie einen MOS-Transistor umfasst, dessen elektrisch isoliertes Gate (8) die Speichermittel (4) bildet und dessen Source (S) und dessen Drain (D) die Lesemittel bilden.

7. Elektronische Vorrichtung nach Anspruch 6, **dadurch gekennzeichnet, dass** sie einen Verarmungs-MOS-Transistor umfasst.

8. Elektronische Vorrichtung nach einem der Ansprüche 1 oder 2, **dadurch gekennzeichnet, dass** die Speichermittel (4) und die Lesemittel (6) eine nichtflüchtige Halbleiterspeicherzelle umfassen.

9. Elektronische Vorrichtung nach Anspruch 8, **dadurch gekennzeichnet, dass** die Halbleiterspeicherzelle aus der Gruppe gewählt ist, die durch Zellen des FAMOS-Typs, Zellen des SIMOS-Typs, Zellen des EEPROM-Typs und Speicherzellen mit getrennter Injektion des EPLD-Typs gebildet ist.

10. Elektronische Vorrichtung nach einem der Ansprüche 1 bis 9, **dadurch gekennzeichnet, dass** die Kontaktmittel (2) aus einem elektrisch leitenden Material gebildet sind, das eine präzise Verfestigungs- und Schmelztemperatur besitzt.

11. Elektronische Vorrichtung nach Anspruch 10, **dadurch gekennzeichnet, dass** das elektrisch leitende Material ein Gemisch aus einer Frostschutzflüssigkeit und Wasser ist, deren Dosierung die Verfestigungstemperatur und die Schmelztemperatur des Gemisches bestimmt.

12. Elektronische Vorrichtung nach Anspruch 11, **dadurch gekennzeichnet, dass** die Frostschutzflüssigkeit Alkohol ist.

13. Elektronische Vorrichtung nach einem der Ansprüche 1 bis 9, **dadurch gekennzeichnet, dass** die Kontaktmittel (2) aus einem Metallwerkstoff verwirklicht sind, der sich in Abhängigkeit von Temperaturschwankungen ausdehnen oder zusammenziehen kann.

14. Elektronische Vorrichtung nach Anspruch 13, **dadurch gekennzeichnet, dass** der Metallwerkstoff aus der Gruppe gewählt ist, die aus Aluminium, Silber, Kupfer, Stahl, Eisen, Invar, Nickel, Gold, Platin, Blei, Silicium, Wolfram und Zink gebildet ist.

15. Elektronische Vorrichtung nach einem der Ansprüche 13 oder 14, **dadurch gekennzeichnet, dass** die Kontaktmittel (2) in Form eines geradlinigen Stabs gegeben sind.

**16.** Elektronische Vorrichtung nach einem der Ansprüche 13 oder 14, **dadurch gekennzeichnet, dass** die Kontaktmittel (2) in Form eines Bimetallstreifens gegeben sind.

**17.** Elektronische Vorrichtung nach einem der Ansprüche 1 bis 16, **dadurch gekennzeichnet, dass** sie einem elektronischen Etikett zugeordnet ist.

**18.** Verfahren zum Betreiben der elektronischen Vorrichtung zum Verfolgen der Temperatur nach einem der vorhergehenden Ansprüche, **dadurch gekennzeichnet, dass** es darin besteht:

- Daten durch Injektion elektrischer Ladungen in die Mittel (4) zum Speichern von Ladungen zu schreiben;
- die elektronische Vorrichtung (1) in einer Umgebung anzuordnen, in der die Verfolgung der Temperaturentwicklung gewünscht ist, um sicherzustellen, dass diese Temperatur zumindest einen im Voraus festgelegten Grenzeinstellwert nicht erreicht;
- während sich die Vorrichtung (1) noch in der zu überwachenden Umgebung befindet, in nicht zerstörender Weise die Daten zu lesen, die in die Mittel (4) zum Speichern von Ladungen geschrieben worden sind, um festzustellen, ob die Temperatur der zu überwachenden Umgebung zu einem gegebenen Zeitpunkt ihren oder einen ihrer im Voraus festgelegten Grenzeinstellwerte erreicht hat oder nicht, d. h., dass die Kontaktmittel (2) nicht geschlossen worden sind und der Ladungszustand der Mittel (4) zum Speichern von Ladungen unverändert geblieben ist, wenn die Temperatur ihren oder einen ihrer Grenzeinstellwerte nicht erreicht hat, während die Kontaktmittel (2) geschlossen worden sind und der Ladungszustand der Mittel (4) zum Speichern von Ladungen modifiziert worden ist, wenn die Temperatur den oder einen ihrer Grenzeinstellwerte erreicht hat, wobei dieser modifizierte Zustand der Ladung der Mittel (4) zum Speichern von Ladungen beibehalten wird, selbst wenn die Temperatur der zu überwachenden Umgebung den Grenzeinstellwert, den sie erreicht hat, erneut unter- oder überschreitet und die Kontaktmittel (2) sich erneut öffnen;
- die Verfolgung der Temperatur aufzunehmen oder anzuhalten und gegebenenfalls
- die elektronische Vorrichtung zur Temperaturverfolgung (1) im Hinblick auf eine neue Verwendung umzuprogrammieren.

**19.** Verfahren nach Anspruch 18, **dadurch gekennzeichnet, dass** der Schritt des Schreibens der Daten durch Injektion elektrischer Ladungen in die Mittel (4) zum Speichern von Ladungen erfolgt, während die Kontaktmittel (2) geschlossen sind.

**20.** Verfahren nach Anspruch 18, **dadurch gekennzeichnet, dass** der Schritt des Schreibens der Daten durch Injektion elektrischer Ladungen in die Mittel (4) zum Speichern von Ladungen erfolgt, während die Kontaktmittel (2) geöffnet sind.

**21.** Verfahren nach einem der Ansprüche 18 bis 20, **dadurch gekennzeichnet, dass** der Schritt des Lesens der Daten, die in die Mittel (4) zum Speichern elektrischer Ladungen geschrieben worden sind, durch Eingeben eines elektrischen Stroms in die Mittel (4) zum Speichern von Ladungen oder Anlegen einer elektrischen Spannung an deren Anschlüsse erfolgt, die in Reaktion darauf eine Spannung bzw. einen Strom liefern, die bzw. der ermöglicht, den elektrischen Widerstand dieser Speichermittel (4) und daher ihren elektrischen Ladungszustand zu bestimmen.

**Claims**

**1.** Electronic device for monitoring the temperature of a medium to be monitored enabling one to make sure that the temperature has not reached at least a pre-established index limit value, this device including electric charge storage means (4) in which the stored charges are kept as long as the temperature does not reach its or one of its index limit values, and being able to flow when the temperature reaches its or one of its index limit values, said device being **characterised in that** it further includes:

- electrically conductive contact means (2) able to close an electric charge flow circuit (18) when said temperature reaches the or one of the index limit values;
- electric charge storage means (4) being able to be connected to the charge flow circuit (18) when the contact means (2) close, the charges stored in said storage means being able to flow through the charge flow circuit (18) when this circuit is closed by said contact means (2), said storage means (4) not returning to the charge state which they had before the charge flow circuit (18) closed if the latter opens again, and
- read means (6) enabling the charge state of said storage means (4) to be determined.

**2.** Electronic device according to claim 1, **characterised in that** the charge storage means (4) include a floating gate (8) separated from a semiconductor substrate (10) by an electrically insulating layer (12), the floating gate (8) having an electric contact point (14) that is accessible from the exterior and that can be connected to an electric contact point (16) of the charge flow circuit (18).

3. Electronic device according to any one of claims 1 or 2, **characterised in that**, in order to be able to evaluate the impedance of the read means (6) and thus to determined the charge state of the floating gate (8), an oscillator circuit (22) is associated with the read means (6), a remote interrogation device (24) being able to be coupled to said read means (6).

4. Electronic device according to any one of claims 2 or 3, **characterised in that** the read means (6) include a pn junction formed at least in part under the floating gate.

5. Electronic device according to any one of claims 2 or 3, **characterised in that** the read means (6) include a bipolar transistor formed at least in part under the floating gate.

6. Electronic device according to any one of claims 1 to 5, **characterised in that** it includes an MOS type transistor whose gate (8), which is electrically insulated, forms the storage means (4), and whose source (S) and drain (D) form the read means.

7. Electronic device according to claim 6, **characterised in that** it includes a depletion MOS type transistor.

8. Electronic device according to any one of claims 1 or 2, **characterised in that** the storage (4) and read (6) means include a non-volatile semiconductor memory cell.

9. Electronic device according to claim 8, **characterised in that** the semiconductor memory cell is chosen from the group formed by FAMOS type cells, SIMOS type cells, EEPROM type cells and EPLD separate injector memory cells.

10. Electronic device according to any one of claims 1 to 9, **characterised in that** the contact means (2) are formed by a material that conducts electricity and having a precise solidification and melting temperature.

11. Electronic device according to claim 10, **characterised in that** the electrically conductive material is a mixture of an antifreeze liquid and water the proportions of which determine the solidification and melting temperature of the mixture.

12. Electronic device according to claim 11, **characterised in that** the antifreeze liquid is alcohol.

13. Electronic device according to any one of claims 1 to 9, **characterised in that** the contact means (2) are made of a metallic material capable of expanding or contracting as a function of temperature fluctuations.

14. Electronic device according to claim 13, **characterised in that** the metallic material is chosen from the group formed by aluminium, silver, copper, steel, iron, invar, nickel, gold, platinum, lead, silicon, tungsten and zinc.

15. Electronic device according to any one of claims 13 or 14, **characterised in that** the contact means (2) take the form of a rectilinear bar.

16. Electronic device according to any one of claims 13 or 14, **characterised in that** the contact means (2) take the form of a bimetalic switch.

17. Electronic device according to any one of claims 1 to 16, **characterised in that** it is associated with an electronic tag.

18. Method for implementing the electronic temperature monitoring device according to any one of the preceding claims, **characterised in that** it comprises the steps of :

- writing data by injecting electric charges into the charge storage means (4);
- placing the electronic device (1) in the medium whose temperature evolution one wishes to monitor in order to ensure that this temperature has not reached at least one pre-established index limit value;
- reading, in a non destructive manner, while the device (1) is still in the medium to be monitored, the data written in the charge storage means (4), so as to determine whether or not the temperature of said medium to be monitored has, at a given moment, reached its or one of its pre-established index limit values, knowing that if the temperature has not reached its or one of its index limit values, the contact means (2) are not closed and the charge state of the charge storage means (4) has remained unchanged, whereas if the temperature has reached its or one of its index limit values, the contact means (2) have closed and the charge state of the charge storage means (4) has been modified, this modified charge state of the charge storage means (4) being preserved even if the temperature of the medium being monitored again passes below or beyond the index value which it has reached and the contact means (2) open again;
- continuing or stopping temperature monitoring and, if necessary,

- reprogramming the electronic temperature monitoring device (1) in order to use it again.

19. Method according to claim 18, **characterised in that** the step of writing data by injecting electric charges into the charge storage means (4) occurs while the contact means (2) are closed.

20. Method according to claim 18, **characterised in that** the step of writing data by injecting electric charges into the charge storage means (4) occurs while the contact means (2) are open.

21. Method according to any one of claims 18 to 20, **characterised in that** the step of reading data written in the electric charge storage means (4) is achieved by applying an electric current or voltage across the terminals of said charge storage means (4) which, in response, provide a voltage, or respectively a current allowing the electric resistance of said storage means (4), and thus their electric charge state, to be determined.

# Fig.1A

# Fig.1B

Fig.2A

Fig.2B

Fig.2C

Fig.2D

Fig.2E

Fig.2F

Fig.2G

Fig.2H

Fig.3A

Fig.3B

Fig.3C

Fig.4A

$V_{PROG}$

16  2  20  8

S

D

14

Fig.4B

$V_{PROG}$

16  2  20  8

S

D

14

Fig.4C

18  16  2  20  8

S

D

14

Fig.4D

18  16  2  20  h+  8

S

D

14

Fig.4E

18  16  2  20  8

S

$I_{READ}$

$V_{READ}$

D

14

## Fig.5A

## Fig.5B

Fig.6A

Fig.6B

Fig.6C

Fig.6D

Fig.6E

## Fig.7A

## Fig.7B

Fig.8A

Fig.8B

Fig.8C

Fig.8D

## Fig.9A

## Fig.9B

Fig.10A

Fig.10B

Fig.10C

Fig.10D

## Fig.11A

## Fig.11B

Fig.12A

Fig.12B

Fig.12C

Fig.12D

Fig.13A

Fig.13B

EP 1 262 756 B1

Fig.14A

Fig.14B

Fig.14C

Fig.14D

37

## Fig.15

DEBUT

S1
PROGRAMMATION

S3
MODIFICATION ETAT DE CHARGE

OUI

NON

TEMPERATURE SEUIL?

S2
SUIVI TEMPERATURE: CONSERVATION DE L'ETAT DE CHARGE

S4
OUI — DERNIER CONTROLE? — NON

LECTURE: CHARGES PRESENTES?

OUI

NON

LECTURE: CHARGES PRESENTES?

NON

OUI

S5
ACCEPTE

S6
REJET

FIN

S7
RECYCLAGE EVENTUEL

# Fig.16

# Fig.17

## Fig.18

## Fig.19